# EUROPEAN PATENT SPECIFICATION

(11) **EP 2 380 995 B1**
(45) Date of publication and mention of the grant of the patent: **01.07.2020**
(21) Application number: 09833996.3
(22) Date of filing: 16.09.2009
(51) Int. Cl.: C21B 13/00, F27B 3/04, F27B 19/04, C21C 7/00, F27B 3/22

(54) **SMELTING VESSEL, STEEL MAKING PLANT AND STEEL PRODUCTION METHOD**
VERHÜTTUNGSKESSEL, STAHLWERK UND VERFAHREN ZUR HERSTELLUNG VON STAHL
RÉCIPIENT DE FUSION, INSTALLATION DE FABRICATION D'ACIER ET PROCÉDÉ DE PRODUCTION D'ACIER

(30) Priority: 22.12.2008 CN 200810238696
(43) Date of publication of application: 26.10.2011
(73) Proprietor: Laiwu Steel Group, Ltd., Shandong 271104 (CN)
(72) Inventor: DONG, Jie, Laiwu City Shandong 271104 (CN); LI, Fenggong, Laiwu City Shandong 271104 (CN); ZENG, Hui, Laiwu City Shandong 271104 (CN); WANG, Xuebin, Laiwu City Shandong 271104 (CN); WANG, Bo, Laiwu City Shandong 271104 (CN)
(74) Representative: Von Rohr Patentanwälte Partnerschaft mbB
(86) International application number: PCT/CN2009/001038
(87) International publication number: WO 2010/072043

(56) References cited:
- EP-A1- 0 905 260
- WO-A1-00/14285
- WO-A1-01/81637
- CN-A- 1 099 418
- CN-A- 1 141 345
- CN-A- 101 445 848
- GB-A- 1 474 357
- JP-A- H0 625 727
- US-A1- 2006 011 013
- US-B1- 6 368 548

## Description

### TECHNICAL FIELD

The present invention belongs to the field of steel-iron metallurgy, and relates to a steel-making process and apparatus with iron-containing materials, especially relates to a production of molten steel with iron-containing materials.

### BACKGROUND ART

With the rapid development of the worldwide steel-iron industry and the increasing importance attached to the environment by the international society, and the shortage of resources such as iron ores, waste steel-iron, coke carbon and so on, especially the shortage of coke coal resource, people attempt to seek a steel-making and iron-making method without using coke coal, especially a method that can reuse the iron-containing powders produced in the process of making steel such as sintering, making iron, making steel by using rotary steel, making steel by using electrical furnace now. Typically, making steel can be divided into short procedure and long procedure according to the process procedure. The long procedure typically begins with iron ore, then sintering (or agglomerating), coking, making iron by the blast furnace, making molten steel by rotary furnace and making steel by refining furnace. Coke carbon is an important raw material that is essential for the long procedure, and because the limited amount of the coking coal resource, coke coal just takes up 5% to 10% of the total amount of the coal and the coke coal that can be explored economically in the prior art takes up only 1.5% to 4%, and the long procedure depending on coke coal is face to the situation of lacking coal resource. Besides, there exists several shortcomings in the long procedure such as large scale, high invest, occupying huge land area, long period of the production, high energy cost per ton of steel, serious environment pollution, and especially the pollution due to making coke system is a drawback that can not be resolved by the traditional long procedure. The short procedure in the prior art takes waste steel, reduced iron (DRI, sponge iron) etc as the raw material, which can be made into the course molten steel by electrical furnace melting and oxiding, to produce steel by refining furnace without coke carbon. The short procedure are typically firstly required to reduce the raw material, and Midrex, HYL method taking the natural gas as the reducing agent and the rotary kiln method, shaft furnace method and rotary hearth furnace method and the like taking coal as the reducing agent are mostly common used. The rotary hearth furnace has been greatly enhanced with the development of more than 30 years, which main processes includes: the INMETCO process of INCO, Ltd., Canada, 1978, a rotary hearth furnace that applies the wastes of metallurgy factory and recycles metals such as Zn, Ni, Cr and so on; Fastmelt process, which was developed in 1960's by Direct Reduction Corporation, U.S.A Midrex and turned to apply rotary hearth furnace to make iron in 1980's, dual connected with the Buried-arc furnace (submerged arc furnace)to form two-step melting reduction process to produce the molten iron; IDP, which is developed by Steel Dynamics Inc., U.S.A, is a rotary hearth furnace taking natural gas as fuel. Redsmelt process, which is developed by Mannesmann Demag AG, Germany, is planning to heat package the molten iron for the steel-making electrical arc furnace produced by NSM Steel Strip Factory (a productivity of 1,500 thousand kg per year). After exhausting from the rotary hearth furnace, DRI is added into an electrical furnace at the temperature of 900°C to obtain the molten iron, with a cost of 168.85 US dollars per ton molten iron calculated, lower than that of molten iron produced by blast furnace and other melting reduction means under equal conditions. Ikmk3 "the third generation iron-making method", which is a novel directly-reduced process by rotary hearth furnace and developed by Kobe Steel Ltd., Japan and Midrex Corp., achieves a significant development in 1990's. Such process allows the metalized pellets (directly-reduced iron, DRI, sponge iron)to melt sightly in the rotary hearth furnace when being reduced in order to produce iron bulks, and the gangue is also melt at the same time, resulting in the initial separation of iron from the slag. The success of such method will render the raw material level to DRI not overcritical, and provide excellent iron material for the electrical furnace by the common blast furnace. Therefore, it is of great significance, and named "The third generation iron-making method" (Itmk3). In the industry, the blast furnace is called the first generation iron-making method, the products of which are liquid molten steel with high carbon content; The directly-reduced process is called the second generation iron-making method, the products of which are solid iron with low carbon content, and the products of the third generation are between these two described above, which are molten-like status (or semi-melting status) with moderate carbon content.

Thus, melt-reducing process is a primary process used in the non-coke coal producing molten steel-rotary furnace making procedure, and there exist COREX, FINEX, AUSIRON, HISMELT, DIOS, ROMELT, CCF, AISI, CLEANMELT and so on known in the art. Most of the melt-reducing processes are still in the research and development stage, and only COREX iron-making process builds five production lines in Pohang, South Africa, India and etc. which have operated for more than 10 years. In particular, the coal consumption of COREX-2000 in South Africa and FINEX in Pohang in South Korea reaches to 720Kg, and COREX-3000 in Baoshan steel Group in China, started operation in November, 2007, the fuel ratio of which was 1054Kg in 2008, in which the coke coal took up 26.25%, that still can not get rid of the coke coal and only can produces the molten iron. The core technique of HISMELT melt-reducing process which has been developed for years is SRV melt-reducing furnace, and a factory of 800 thousand tons has been established in Cunna in Australia, and is under trial operation now. The molten iron with a carbon content of about 4.3% produced by SRV melt-reducing furnace can not meet the requirement of the refining steel-making process which needs a carbon content of less than 0.1%, and SRV melt-reducing furnace still suffers from the problem of low heat transfer.

CN02116882.2 discloses a steel-making method operated directly by coal-iron ore microwave reducing electrical furnace and an apparatus thereof. It is difficult for this method to produce in scale because of its low productivity. CN86105494 discloses a steel-making and rolling method operated directly by lignite pre-reducing ore, wherein the ore is firstly made into sponge iron, and then made into steel by the electrical furnace, and then rolled into steel mould, but the energy utility and productivity is low. CN200610040303.1 discloses a direct steel-making process with induction furnace, which energy utility and productivity is low too. CN200610040696.6 discloses a steel-making method operated directly on a convertor and with the mixture of iron ore powder and anthracite duff, and CN200610040838.9 discloses a steel-making method operated directly on electrical furnace and the mixture of millscale and anthracite duff, as well as CN87101210 discloses a method operated directly with iron ore, all of which relate to a steel-making method that cool agglomerates without any reduction made from iron ores, non-coke coals and flux are added to the modern industrial smelting furnace. In these methods, the iron ores are reduced with low efficiency, high energy consumption and low productivity. CN92113519.X discloses a steel-making method operated directly with ores and an apparatus thereof, wherein the ores are reduced into sponge iron by reduced gas firstly, and then the high-temperature sponge iron is fed into melting camber to melt under a condition isolated from atmosphere air, and then the slag-making agent is added to remove the harmful element. This method is with high energy consumption and low productivity and has never been reported to be industrialized. CN86106417 relates to serialization of making steel by blast furnace continuously and making steel, and raises an improved blast furnace with pure oxygen and pressured gasified coal gas as fuel, and a method for making steel directly by adding reducing agent. However, this method still fails to eliminate the procedure of sintering and agglomerating and so on, and has never been reported to be industrialized. CN87104957.0 relates to a continuous steel-making method by groove furnace and an apparatus thereof, wherein the former furnace, groove furnace and rear furnace are arranged, however, the raw materials used are still blast furnace molten iron, which is with low efficiency and high cost.

Furthermore, the document US 6,368,548 B1 refers to a smelting process for producing metals from metalliferous feed material. The process includes forming a molten bath having a metal layer and a slag layer on the metal layer and smelting injected metalliferous feed material in the metal layer. The process also includes generating an upward gas flow from the metal layer which entrains molten material that is in the metal layer and carries the molten material into the slag layer and forms a region of turbulence at least at the interface of the slag layer and the metal layer. The process also includes injecting a gas into the slag layer via a plurality of lances/tuyeres and generating slag turbulence in an upper region of the slag layer and projecting splashes, droplets and streams of molten material from the slag layer into a top space of the vessel that is above the slag layer.

The US 2006/0011013 A1 relates to a process and device for direct continuous steel production out of iron-containing materials using usual power coals as fuel and reducer. It is provided to carry out the process in a single reaction space comprising a layer of liquid refining metal present under a layer of liquid slag comprising iron-containing materials to be processed and droplets of reduces metal so that an intermediate emulsion layer "slag-gas-metal" is designated in between the said layers. In an upper slag layer fuel is burnt and finely grained iron-containing materials are reduced according to coke-free technology of cast-iron production with carbon content at the level of ∼4.5-4.8%; iron oxides and reduced metal droplets are transferred from slag layer into intermediate emulsion layer; iron oxides are decomposed and oxygen is isolated together with oxygen-containing gas supplied to emulsion layer.

The EP 0 905 260 A1 relates to a smelting reduction apparatus for producing a molten metal under a slag by charging a metal raw material, a carbon material and a flux into a furnace having a rectangular horizontal section, and blowing oxygen and/or oxygen-enriched gas into the slag through lower tuyeres provided in the furnace side walls and a method for operating the same are improved.

### SUMMARY OF THE INVENTION

In order to overcome the shortcomings of the prior art, the present invention provides a continuous steel-making apparatus and a steel-making process, whereby the shortcomings such as low productivity of making steel and high energy consume in the prior art can be overcome.

In particular, the present invention relates - according to the first aspect - to a continuous steel-making apparatus, comprising:
a pre-reduction device for pre-reducing an iron-containing material,
a smelting furnace 96, comprising
a furnace body for accommodating molten steel and steel slag over the molten steel,
a feeding member for feeding the iron-containing material pre-reduced by the pre-reduction device into the furnace body, and
an outlet for steel for exhausting the molten steel from the furnace body, and
the smelting furnace 96 further comprises at least one spraying gun for carbon-containing material 911 with the muzzle thereof inserted into the steel slag for spraying a carbon-containing material to the steel slag;
and the smelting furnace 96 further comprises at least one oxygen gun of the smelting furnace 912 with the muzzle thereof inserted into the steel slag for blowing oxygen gas to the steel slag, and by spraying the carbon-containing material and blowing the oxygen gas, a foam-slag-boiling is formed in the steel slag;
and at least one CO-oxygen burning gun 99 inserted into the furnace body with the muzzle thereof located above the steel slag;
and the feeding member is arranged to feed the iron-containing material pre-reduced into the foam-slag-boiling zone and wherein the feeding member comprises a spray gun inserted into the foam-slag-boiling zone for spraying the iron-containing material therein, and/or a serial type distributor 95 aimed at the foam-slag-boiling zone for feeding the iron-containing material; and,
a molten steel-treating vessel, which is in communication with the outlet for steel of the smelting furnace 96 and is used to receive the molten steel from the smelting furnace and decarbonize, desulfurize and dephosphorize the molten steel,
wherein the spraying gun for carbon-containing material 911 and the oxygen gun of the smelting furnace 912 are arranged in one of the following modes:
   (a) the at least one spraying gun for carbon-containing material 911 is arranged immediately above the at least one oxygen gun of the smelting furnace 912, and the at least one spraying gun for carbon-containing material 911 and the at least one oxygen gun of the smelting furnace 912 are arranged up and down; or
   (b) the spraying gun for carbon-containing material 911 and the oxygen gun of the smelting furnace 912 are configured into a coal-oxygen gun in sleeve form, wherein the inner tube is used for delivering the carbon-containing material, and the outer tube is used for delivering oxygen gas, wherein the coal-oxygen gun is arranged to insert the muzzle thereof at the height of 1/5 to 1/3 above from the bottom of the steel slag, and/or wherein the coal-oxygen gun is arranged to form an α angle relative to the horizontal inclined downwards, and the horizontal projection of the coal-oxygen gun forms a β angle relative to the normal direction of the inner surface of the furnace body at the insertion point, wherein the α angle is in the range of 15° to 60°, and the β angle is in the range of 0° to 45°.

Thus, the present invention provides a smelting furnace, which comprises a furnace body for accommodating molten steel and steel slag, a feeding member for feeding iron-containing material into the furnace body, and an outlet for steel for exhausting the molten steel from the furnace body, wherein a foam-slag-boiling zone is formed in the steel slag over the molten steel, characterized in that, the smelting furnace further comprises at least one coal-oxygen gun with the muzzle thereof inserted into the steel slag, for blowing oxygen gas and a carbon-containing material into the steel slag, so that the foam-slag-boiling zone is formed in the steel slag, and the feeding member is arranged to feed the iron-containing material into the foam-slag-boiling zone.

The outlet for steel is preferably a siphon outlet for steel.

The muzzle of the coal-oxygen gun is preferably arranged to be inserted into the steel slag in such a manner that the flame from oxygen gas and the carbon-containing material is buried in the steel slag. For the present invention, it is quite advantageous for the flame from oxygen gas and a carbon-containing material to be buried in the steel slag, because the heat produced by burning can be absorbed efficiently by the steel slag.

For a person skilled in the art, the coal-oxygen gun is well known and should be understood as a general member for spraying the carbon-containing material and oxygen gas. A person skilled in the art can use any suitable coal-oxygen inputting members to input the carbon-containing material and oxygen gas. The coal-oxygen gun is substitutable, for example. In one preferred embodiment, the coal-oxygen gun is in sleeve form, wherein the inner tube is used for delivering the carbon-containing material, and the outer tube is used for delivering oxygen gas. Alternatively, the carbon-containing material and oxygen gas can be also delivered by two cold-water tubes in parallel respectively, which can be also referred as the coal-oxygen gun.

The ratio between oxygen gas and carbon-containing material sprayed by the coal-oxygen gun can be adjusted, and the concentration of carbon in the steel slag can maintain appropriate by adjusting the ratio between oxygen gas and the carbon-containing material, preferably is 3-12wt%.

According to mode (b) of the present invention, the muzzle of the coal-oxygen gun is inserted at the height of 1/3-1/5 above from the bottom of the steel slag.

The furnace body of the smelting furnace is preferably in cylinder shape.

According to mode (b) of the present invention, the coal-oxygen gun is arranged to form an α angle relative to the horizontal downwards, and the horizontal projection of the coal-oxygen gun forms a β angle relative to the normal direction of the inner surface of the furnace body at the inser t point, wherein the α angle is in the range of 15° to 60°, and the β angle is in the range of 0° to 45°. In a preferred example, the coal-oxygen gun is arranged as the α angle to blow the carbon-containing material and oxygen gas declinedly, which is advantageous to the kinetic property of the reaction. Moreover, the coal-oxygen gun is arranged as the β angle to blow the steel slag to make it rotate, which further improves the kinetic property of the reaction. According to the β angle of the coal-oxygen gun arranged, the steel slag can rotate clockwise, counter-clockwise, or not rotate.

Preferably, a plurality of coal-oxygen guns are arranged, which can be arranged uniformly around the furnace body and inserted into the steel slag from the side wall of the furnace body. Of course, these guns can also be not arranged uniformly. It is quite advantageous to arrange the coal-oxygen guns uniformly and arrange them as the β angle above described, because such arrangement can blow the steel slag over the molten steel to rotate better, in order to improve the kinetic property of the reaction.

According to the present invention, the feeding member comprises a spraying gun inserted into the foam-slag-boiling zone to spray the iron-containing material in. Alternatively, the feeding member comprises a serial type distributor located above the foam-slag-boiling zone and is aimed to the foam-slag-boiling zone, for feeding the iron-containing material into the foam-slag-boiling zone.

According to the present invention, further comprises a coal gas burning oxygen gun inserted into the furnace body with the muzzle thereof located over the steel slag. It can be understood that the oxygen gun is used to spray high-temperature oxygen gas or oxygen-rich air in order to burn the coal gas (CO and H₂) within the furnace cavity at the upper part of the smelting furnace. The heat is transferred to the smelting slag to facilitate the melting of the iron-containing material and the flux material.

According to still yet another preferred example of the present invention, blowing oxygen gas permeable bricks are arranged at the bottom of the smelting furnace. The blowing oxygen gas permeable bricks of the smelting furnace blow oxygen continuously to the molten steel to decarbonize it, thus increasing the temperature of the molten steel and agitating the molten pool. It is especially preferred that the blowing oxygen gas permeable bricks can comprise respectively the ones located in the center of the bottom of the furnace body and the ones near the furnace bottom of the outlet for steel.

Two to four blowing oxygen gas permeable bricks can be arranged, depending on the size of the smelting furnace. A person skilled in the art can optimally design/select the number and location of the blowing oxygen gas permeable bricks according to the actual demand.

The smelting furnace further comprises at least one inert gas-spraying gun inserted into the molten steel, preferably is argon gas gun. It is advantageous for the argon gas gun to be inserted into the molten steel from any suitable location of the side wall of the furnace body. Preferably, the argon gas gun is substitutable.

It is advantageous for the smelting furnace to have an outlet for slag located on the side wall of the furnace body and at the upper limit position of the steel slag layer. The outlet for steel comprises a siphon outlet for steel located at the lower part of the furnace body to ensure to exhaust steel without slag. It is preferred that a taphole is arranged at the bottom of the smelting furnace to use when repairing the apparatus.

The lower outer shell of the smelting furnace accommodating the molten steel and the steel slag and the outer shell comprising the outlet for steel both apply a structure of water-cold furnace wall, which advantageously extends the service life of the smelting furnace, and even extends the service life of the smelting furnace up to more than 20 years.

Preferably, an output member for coal gas is arranged at the upper part of the smelting furnace for recycling the waste gas produced during the steel-making process.

The present invention also provides a continuous steel-making apparatus, comprising a pre-reduction device for pre-reducing the iron-containing material; a smelting furnace according to the present invention, wherein the feeding member is used to feed the iron-containing material pre-reduced by the pre-reduction device into the furnace body of the smelting furnace; and a molten steel-treating vessel, which is in communication with the outlet for steel of the smelting furnace and is used to receive the molten steel from the smelting furnace and to desulfurize and dephosphorize the molten steel.

According to a further example of the present invention, the steel-making apparatus further comprises a refining furnace for refining the molten steel treated with the molten steel-treating vessel.

According to the present invention, the pre-reduction device includes a rotary hearth furnace and/or a suspension pre-reduction furnace. Furthermore, the apparatus can comprise a conveyor for delivering the pre-reduced iron-containing material from the pre-reduction device to the feeding member.

According to one specific example of the present invention, the pre-reduction device is the rotary hearth furnace, which comprises a screw discharging machine. The conveyor comprises an out-feeding hopper of the rotary hearth furnace, a primary screw conveyor, an intermediate stocking tank, a secondary screw conveyor connected successively, and the conveyor is connected respectively with the screw discharging machine and the feeding member (here referred as a serial type distributor). Preferably, a hopper for flux is arranged over the out-feeding hopper of the rotary hearth furnace.

According to another specific example of the present invention, the pre-reduction device is a rotary hearth furnace, which comprises a screw discharging machine. The conveyor comprises an out-feeding hopper of the rotary hearth furnace, a delivery vehicle, a track for the delivery vehicle and an unloaded hopper, wherein the pre-reduced iron-containing material of high temperature is delivered through the screw discharging machine into the out-feeding hopper of the rotary hearth furnace, by which is loaded into the delivery vehicle. The delivery vehicle is delivered into the unloaded hopper by the track, and the unloaded hopper is connected with the serial type distributor. Likewise, a hopper for flux can be arranged over the out-feeding hopper of the rotary hearth furnace.

According to one specific example of the present invention, the pre-reduction device is a suspension pre-reduction furnace. The conveyor can be a high-temperature dense-phase delivery bed, which comprises a sending tank and a delivery pipe connected in series, and preferably the delivery pipe is in communication with the upper part of the feeding member (the serial type distributor).

According to one preferred example of the present invention, the pre-reduction device is still a suspension pre-reduction furnace. The feeding member is a spraying gun inserted into the steel slag for spraying the pre-reduced iron-containing material in, and the other end of said spraying gun is connected with the suspension pre-reduction furnace, thereby the feeding member and the conveyor are assembled together to form the spraying gun.

According to another example of the present invention, the molten steel-treating vessel for blowing oxygen for decarbonization, desulfurization and dephosphorization comprises an oxygen-blowing furnace, and the oxygen-blowing furnace comprises a member such as an oxygen gun for blowing oxygen gas in.

As the oxygen-blowing member, blowing oxygen gas permeable bricks are arranged at the bottom of the oxygen-blowing furnace for blowing oxygen continuously and gently to the molten steel in order to decarbonize the molten steel stably and to prevent the molten steel from huge boiling and spouting and the like and to increase the temperature of the molten steel. Depending on the size of the oxygen-blowing furnace, one to three pieces of blowing oxygen gas permeable bricks can be arranged and installed for optimal design.

According to one example of the present invention, the oxygen gun inserted from above is arranged in the oxygen-blowing furnace to blow the molten steel, so that the carbon content and the molten steel temperature of the molten steel can meet the demand of the refining furnace.

The outlet for steel is arranged at the lower part of the side wall of the oxygen-blowing furnace for achieving to exhaust steel without slag. Moreover, the outlet for slag is arranged at a certain height of the side wall of the oxygen-blowing furnace, when the molten steel reaches the height, a certain amount of the steel slag is first exhausted, and then the steel is exhausted. A taphole is preferably arranged at the bottom of the oxygen-blowing furnace for use when repairing the furnace. Preferably, the outer shell of the oxygen-blowing furnace accommodating the molten steel applies the structure of the water-cold furnace wall.

Preferably, the oxygen-blowing furnace further comprises a member for adding flux in. The coal gas output member is preferably arranged on the top of the oxygen-blowing furnace to recycle the exhausted waste gas. Preferably, the coal gas output member over the smelting furnace is connected with the coal gas output member on the top of the oxygen-blowing furnace to reach the pressure equilibrium.

According to yet another example of the present invention, the refining furnace includes RH refining furnace or LF refining furnace.

The present invention provides - according to the second aspect of the present invention - a steel-making process, which comprises the steps of:
i) forming a molten pool composed of molten steel as the lower layer and steel slag as the upper layer in a smelting furnace 96 comprising an outlet for steel,
ii) spraying a carbon-containing material into the steel slag in the smelting furnace 96 by using at least one spraying gun for carbon-containing material 911 with the muzzle thereof inserted into the steel slag, and blowing oxygen gas into the steel slag in the smelting furnace by using at least one oxygen gun of the smelting furnace 912 with the muzzle thereof inserted into the steel slag, wherein the carbon-containing material and oxygen gas conduct a burning-exothermal reaction in the steel slag, and the gas produced by the burning-exothermal reaction and the impact force formed by the blowing of the coal-oxygen gun are applied to the steel slag together to form a foam-slag-boiling zone in the steel slag;
iii) adding an iron-containing material into the foam-slag-boiling zone; and
iv) exhausting steel from the smelting furnace 912 through the outlet for steel
   wherein the spraying gun for carbon-containing material 911 and the oxygen gun of the smelting furnace 912 are arranged in one of the following modes:
   (a) the at least one spraying gun for carbon-containing material 911 is arranged immediately above the at least one oxygen gun of the smelting furnace 912, and the at least one spraying gun for carbon-containing material 911 and the at least one oxygen gun of the smelting furnace 912 are arranged up and down; or
   (b) the spraying gun for carbon-containing material 911 and the oxygen gun of the smelting furnace 912 are configured into a coal-oxygen gun in sleeve form, wherein the inner tube is used for delivering the carbon-containing material, and the outer tube is used for delivering oxygen gas, wherein the coal-oxygen gun is arranged to insert the muzzle thereof at the height of 1/5 to 1/3 above from the bottom of the steel slag, and/or wherein the coal-oxygen gun is arranged to form an α angle relative to the horizontal inclined downwards, and the horizontal projection of the coal-oxygen gun forms a β angle relative to the normal direction of the inner surface of the furnace body at the insertion point, wherein the α angle is in the range of 15° to 60°, and the β angle is in the range of 0° to 45°.

In this process, the carbon-containing material and oxygen gas that are both blown into the steel slag react to each other, and the produced gas and the oxygen gas blown into make the steel slag into foam slag containing amounts of foams. That will definitely improve the reaction kinetic property.

Furthermore, the heat produced by the burning-exothermal reaction of carbon-containing material and oxygen gas is absorbed by the steel slag for enhancing the reaction kinetic property and thereby further increasing the reaction efficiency and energy efficiency of the process. Particularly, the step ii) comprises allowing the flame produced by the burning-exothermal reaction to be buried in the steel slag.

The ratio of oxygen gas and the carbon-containing material that are both sprayed by the coal-oxygen gun can be adjusted, and the concentration of the carbon in the steel slag can be maintained by adjusting the ratio of oxygen gas and the carbon-containing material, preferably is 3-12wt%.

According to this process, it should be appreciated by a person skilled in the art that the foam-slag-boiling zone is the distribution zone of the iron-containing material.

In this process, the melting and reduction reaction of the iron-containing material added to the smelting furnace are both completed in the steel slag and the interface of the steel slag, which avoids the problem that a large amount of carbon-containing material enters the molten steel, causing the huge increase of carbon in molten steel, which then makes the molten steel turn into the molten iron. This is particular advantageous, because it can be quite easy to obtain molten steel with a carbon content no higher than 3.5wt%with low energy consumption.

According to a preferred example of the present invention, the temperature of the molten steel added into the molten pool at the beginning is in the range of between 1350°C and 1550°C.

According a further example of the present invention, in the step ii), the exothermal reaction of the carbon-containing material and oxygen gas renders the steel slag to reach a temperature between 1500°C and 1650°C, and meanwhile the temperature of the molten steel under the steel slag reaches between 1500°C and 1550°C.

Preferably, in the step i), the thickness of the molten steel layer in the molten pool is between 500mm and 1000mm, and the thickness of the steel slag layer is between 500mm and 1500mm.

According to mode (b) of the present invention, the step ii) comprises blowing the carbon-containing material and oxygen gas by using a coal-oxygen gun at the height of 1/3-1/5 above from the bottom of the steel slag. Said carbon-containing material is preferably one or more of coal powder, coke powder, natural gas, combustible ice, coke oven gas, generated coal gas and the like. The combustible ice is a natural gas hydrate, which is formed as a white solid crystalline substance by the interaction between gas or volatile liquid and water under certain conditions (suitable temperature, pressure, gas saturation, salty of the water, pH and so on), the appearance of which is ice-like.

For a person skilled in the art, the coal-oxygen gun is well known and should be appreciated as a common member for spraying the carbon-containing material and oxygen gas. A person skilled in the art can employ any suitable coal-oxygen input member to input the carbon-containing material and oxygen gas. For example, the coal-oxygen gun is substitutable. In mode (b), the coal-oxygen gun is in sleeve tube-shape, the inner tube of which is used to deliver the carbon-containing material, and the outer tube of which is used to deliver oxygen gas. Alternatively, the carbon-containing material and oxygen gas can be delivered by using two water-cold tubes in parallel, respectively, which can also be called the coal-oxygen gun. Preferably, the ratio between coal and oxygen blown by the coal-oxygen gun can be controlled to decrease the carbon added to the molten steel, and meanwhile a certain concentration of carbon in the steel slag is maintained (preferably is 3-12 wt%). Depending on the size of the smelting furnace and the requirement for the metallurgy, 2-16 coal-oxygen guns can be arranged at suitable positions around the furnace wall, which provide sufficient physical and chemical reaction kinetic conditions and melting heat for the rapid melting of the iron-containing material. A person skilled in the art can select the numbers and positions of the coal-oxygen guns depending on the actual requirements.

More preferably, in the step ii), a plurality of coal-oxygen guns are inserted into the steel slag in the manner of being arranged around the furnace wall uniformly, and blow the carbon-containing material and oxygen gas. Alternatively, said coal-oxygen guns can be inserted in the manner of being arranged around the furnace wall non-uniformly.

According to one example of the present invention, in the step ii), the coal-oxygen gun is arranged to form an α angle relative to the horizontal downwards to be inserted into the steel slag and blow the carbon-containing and oxygen gas, wherein the α angle is between 0°and 90°, which is advantageous for the steel slag to absorb the heat produced by the coal-oxygen combustion efficiently and improve the reaction kinetic property. According to one preferred example of the present invention, the α angle is between 15° and 60°.

According to another example of the present invention, in the step ii), the coal-oxygen gun is inserted into the steel slag in the manner that the horizontal projection of the coal-oxygen gun forms a β angle relative to the normal direction of the inner surface of the furnace body at the insertion point, and blows the carbon-containing material and oxygen gas, wherein the β angle is between 0° and 45°. Particularly, when β=0, the steel slag will not rotate, and when β≠0, the steel slag can rotate. Herein, the β angle preferably is between 0 and 45°. In this case, preferably, said coal-oxygen gun is arranged to make the steel slag rotate clockwise, or make the steel slag rotate counter clockwise. The steel slag can rotate according to the arrangement of the β angle, and thereby the reaction kinetic property is improved.

According to mode (b) of the present invention, in the step ii), the coal-oxygen gun is inserted into the steel slag inclined downwards with an α angle relative to the horizontal and with a β angle between the horizontal projection of the coal-oxygen gun and the normal direction of the inner surface of the furnace body at the insertion point, and blows the carbon-containing material and oxygen gas to make the steel slag rotate, wherein the α angle is in the range of 15° to 60°, and the β angle is in the range of 0° to 45°. It is quite advantageous for the coal-oxygen gun to blow inclined to make the foam-slag-boiling zone rotate clockwise or counter-clockwise, which in this case further promote the physical and chemical reaction kinetics.

Particularly, when there are a plurality of coal-oxygen guns which are arranged uniformly in the manner described above to be inserted into the steel slag and arranged in the case that β angle does not equal to zero described above, it is much more helpful for the steel slag to rotate and flow in order to provide improved reaction kinetic property.

Preferably, in the step iv), the outlet for steel includes a siphon outlet for steel, and thereby achieve to obtain the steel without slag from the smelting furnace.

Further, the benefit of this process is that the gas produced by the reduction reaction of the iron-containing material in the foam slag is applied to the foam slag to facilitate forming the foam-slag-boiling zone (distribution zone) and/or enhancing the physical and chemical reaction kinetic property.

According to one especially preferred example of the present invention, preferably further comprised is that the high-temperature oxygen gas or oxygen-rich air is blown into the air phase space over the steel slag layer in the smelting furnace by a coal gas burning oxygen gun, and the high-temperature oxygen gas or oxygen-rich air combust with the coal gas (CO and H₂) produced by the smelting furnace. The high temperature produced by combustion is transferred into the slag to accelerate the melting of the iron-containing material and the flux. The temperature of the blown gas is preferably 1200°C to 1250°C.

According to another preferred example of the present invention, further comprised is that inert gas is blown into the molten pool to agitate the molten steel in the molten pool. The inert gas preferably includes nitrogen gas and/or argon gas. The inert gas has an effect of agitating the molten pool. An argon gas gun is preferably arranged to blow the argon gas in, which is inserted into the molten steel from any suitable position on the side wall of the smelting furnace. The number of the argon gas guns can be 1 to 3, and the argon gas gun is preferably substitutable.

According another preferred example of the present invention, further comprised is that oxygen gas is blown into the molten steel in the molten pool through the blowing oxygen gas permeable bricks at the bottom of the smelting furnace, for decarbonizing the molten steel, increasing the temperature of the molten steel and agitating the molten steel in the molten pool. The number of blowing oxygen gas permeable bricks can be 2 to 4 pieces, which can be arranged near the siphon outlet for steel at the bottom of the smelting furnace, at the center of the smelting furnace bottom or at other suitable position of the smelting furnace bottom.

Preferably, the iron-containing material is added into the foam-slag-boiling zone (distribution zone) by using a serial type distributor, or sprayed into the foam-slag-boiling zone of the steel slag by a spraying gun. The iron-containing material sprayed by the spraying gun is preferably micro-powder.

According to one preferred example of the present invention, flux can be added into the smelting furnace to produce slag and to desulfurize and dephosphorize the molten steel.

The flux is preferably one or more of caustic lime, dolomite and fluorite.

The flux is preferably made into powder with a diameter of 1 to 3mm and added into the iron-containing material, with which is added into the distribution zone of the smelting furnace through the serial type distributor or spraying gun.

According to one preferred example of the present invention, this process further comprises the step of pre-reducing the iron-containing material by using a pre-reduction device before the iron-containing material is added into the foam-slag-boiling zone.

The pre-reduction device includes preferably a rotary hearth furnace and/or a suspension pre-reduction furnace.

In the process of the present invention, the iron-containing material with a pre-reduction metallization of 80-97wt% melts into the molten steel and then enters into the molten steel under the steel slag layer; the non-prereduced iron-containing material which takes up 3 to 20wt% melts into liquid iron oxides, and is reduced quickly by the carbon in the foam slag to obtain the molten steel. Therefore, the carbon content in the molten steel in this process can be controlled below 3.5wt%, such as 2.0 to 3.0wt%.

More preferably, the iron-containing material is formed into pellets before adding into the rotary hearth furnace. Alternatively, the iron-containing material is formed into micro-powder with a size of 1µm to 40µm, and then is added into the suspension pre-reduction furnace. Preferably, the temperature of pre-reduced iron-containing material by the suspension pre-reduction furnace is between 400-800°C. Alternatively, preferably, the temperature of pre-reduced iron-containing material by the rotary hearth furnace is between 900-1200°C.

The iron-containing material can be selected from one or more of iron containing ore, millscale, iron containing dust and/or iron containing soil.

According to another preferred example of the present invention, the process of the present invention further comprises conducting blowing oxygen treatment to the molten steel flowing from the smelting furnace to the blowing oxygen furnace through the outlet for steel by using a blowing oxygen furnace. Preferably, the blowing oxygen furnace is in communication with the outlet for steel of the smelting furnace in such a way that, the molten steel initially accommodated in the smelting furnace need flowing into the blowing oxygen furnace, so that the amount of the molten steel within the blowing oxygen furnace reaches 1/3 to 2/3.

After charging the initial molten steel, oxygen can be blown gently by the blowing oxygen gas permeable bricks at the bottom of the oxygen-blowing furnace. According to one preferred example of the present invention, oxygen is blown appropriately by the top oxygen-blowing gun to further adjust the carbon content in and temperature of the molten steel, and thereby to obtain molten steel with a desired carbon content (C: 0.01 to 0.40wt%) and temperature (1580°C to 1680°C) for being applied by a refining furnace.

According to another preferred example of the present invention, further comprised is that flux is added into the oxygen-blowing furnace to produce slag and conduct desulfurization and dephosphorization, and in addition, the alkalinity of the furnace slag is controlled between 3.0 and 3.5 to obtain molten steel with a carbon content of 0.01 to 0.40wt%, which thereby can be applied directly by LF or RH refining furnace. In order to calculate the alkalinity of the slag, the dual-alkalinity calculation method is commonly employed during the production, which is to calculate the ratio of CaO/SiO2. Herein, the flux can be added in the amount of 40kg to 70kg per 1000kg molten steel.

In this process, the oxygen-blowing furnace is used to desulfurize and dephosphorize the molten steel and further to adjust the carbon content, and thereby to obtain molten steel with a carbon content of 0.01wt% to 0.40wt% and meeting the refining condition, which is quite advantage for the production.

The high-temperature coal gas produced by the reaction in the smelting furnace can preferably be recycled by the residue heat oven to generate electricity by heat, or can be used to preheat the raw material, or can be used as the fuel gas for rotary hearth furnace or the reduction gas for the suspension pre-reduction furnace.

The present invention provides a continuous steel-making process on the basis of the afore described steel-making process, which comprises:
i) forming a molten pool composed of molten steel as the lower layer and steel slag as the upper layer in a smelting furnace comprising an outlet for steel;
ii) spraying a carbon-containing material into the steel slag in the smelting furnace by using at least one spraying gun for carbon-containing material with the muzzle thereof inserted into the steel slag, and blowing oxygen gas into the steel slag in the smelting furnace by using at least one oxygen gun of the smelting furnace with the muzzle thereof inserted into the steel slag, wherein the carbon-containing material and oxygen gas conduct a burning-exothermal reaction in the steel slag, and the gas produced by the burning-exothermal reaction and the impact force formed by the blowing of the coal-oxygen gun are applied to the steel slag together to form a foam-slag-boiling zone in the steel slag;
iii) adding an iron-containing material pre-reduced by a pre-reduction device into the foam-slag-boiling zone; and
iv) desulfurizing and dephosphorizing the molten steel exhausted from the outlet for steel, to obtain molten steel with a carbon content of 0.01 wt% to 0.40 wt%.

Wherein, the heat produced by the burning-exothermal reaction of the carbon-containing material and oxygen gas is absorbed by the steel slag to enhance the reaction kinetic property, and thereby to increase the reaction efficiency and energy efficiency of this process. Particularly, in the step ii), the flame produced by the burning-exothermal reaction is buried in the steel slag.

According to a further example, the continuous steel-making process further comprises, after the step iv), refining the molten steel with a carbon content of 0.01 to 0.40wt% obtained. Therefore, RH refining furnace or LF refining furnace is preferably employed.

According to one especially preferred example of the continuous steel-making process in the present invention, the molten pool for the steel slag can be formed previously within the smelting furnace, and the thickness of the slag layer is 500mm to 1500mm, wherein the carbon-containing material and oxygen gas are sprayed to the position of 1/3 to 1/5 above the bottom of the molten slag by using at least one coal-oxygen gun. At the same time, the carbon-containing material and oxygen gas conduct the burning-exothermal reaction, the heat produced by which is absorbed by the molten slag efficiently. Furthermore, the impact force formed from the spraying flow by the coal-oxygen gun, the gas produced from the reaction between the carbon-containing material and oxygen, and the gas produced from the reduction reaction of the iron-containing material, function together to form the foam-slag-boiling zone (distribution zone). After pre-reduced by the rotary hearth furnace or the suspension pre-reduction furnace, the carbon-containing material and the flux with high temperature (the temperature of suspension pre-reduction is 400°C to 800°C, and the temperature of rotary hearth furnace pre-reduction is 900°C to 1200°C) are added to the foam-slag-boiling zone. The portion that has been reduced in the high-temperature iron-containing material (the metallization is 80 to 97wt%) is melted into molten steel (with a carbon content of 1.0 to 2.0 wt%) quickly and enters into the molten slag layer; and the other small portion (takes up 3 to 20 wt %)of the iron-containing material that has not been reduced melts into liquid iron oxide, which is reduced quickly by the high-temperature carbon-containing material in the steel slag into the molten steel. The molten steel is carburized by the high-temperature carbon in the molten slag during the process of entering into the molten steel layer through the slag layer, and meanwhile the carbon on the interface of the steel slag also penetrates continuously into the molten steel to obtain molten steel with a carbon content of 1.0 to 3.5wt%. Two coal gas-oxygen burning guns are arranged within the space over the steel slag layer to compensate heat for the molten slag in order to accelerate the melting of the iron-containing material. The argon gas gun is immersed in the molten steel to agitate the smelting pool of the smelting furnace, and thereby to improve the reaction kinetic conditions, and to homogenize the temperature and components. The oxygen gas blown in by the blowing oxygen gas-permeable bricks at the bottom of the smelting furnace has the effects of decarbonizing the molten steel in the smelting pool, increasing the temperature of the molten steel, agitating the molten steel in the smelting furnace, improving reaction kinetic conditions, and homogenizing the temperature and components in the smelting pool. The molten steel is exhausted without slag continuously from the siphon outlet of the smelting furnace to the blowing oxygen furnace, and appropriate amount of slag-making agent is added to the blowing-oxygen furnace, which meanwhile has desulfurizing and dephosphorizing effect. While blowing oxygen to decarbonize the molten steel, the temperature of the molten steel is increased to obtain molten steel with desired carbon content (0.01 to 0.40 wt%) and temperature, which is then employed directly by RH or LF refining furnace. That exhausting steel at the bottom of the oxygen-blowing furnace achieves exhausting steel without slag. The high-temperature coal gas in the smelting furnace and oxygen-blowing furnace can be recycled by the residue heat oven to generate electricity by heat or preheat the raw material, or can be used as the fuel gas for the rotary hearth furnace or reduction gas for suspension pre-reduction furnace.

It should be noted that, otherwise indicated, the percentages mentioned herein are all the weight percentages (wt%).

The advantages of the present invention are as follows:
The carbon-containing material and oxygen gas are blown into the steel slag in the smelting furnace to form steel slag in the form of foam slag. The heat produced from the fast combustion reaction of carbon and oxygen is absorbed by the foam slag and the steel slag interface, and the heat efficiency is quite high. The impact force from the spraying flow by the coal-oxygen gun, the gas produced from reaction between the carbon-containing material and oxygen, and the gas produced from the reduction reaction of the iron-containing material, function together to form the foam-slag-boiling zone, and the conditions of the reaction kinetics are excellent.

The highly pre-reduced iron-containing material (the metallization ratio is 80 to 97wt%) of high temperature (400°C to 1200°C), which is pre-reduced sufficiently by the rotary hearth furnace or the suspension pre-reduction furnace, can melt quickly into molten steel in the foam-slag-boiling zone, and meanwhile small amount of the non-prereduced melting iron-containing material(which takes up 3 to 20wt%) is reduced quickly by the high-temperature carbon in the molten slag to obtain molten steel with a carbon content of 1.0 to 3.5wt%. The high productivity and high utility of the residue heat of the present invention are superior to the prior arts such as blast furnace-rotary furnace procedure, COREX melting reducing making iron-rotary furnace procedure, Hismelt-rotary furnace, and also superior to the continuous steel making method or one-step steel-making method disclosed in some patents.

The heat of the high-temperature pre-reduced iron-containing material provided by the rotary hearth furnace or the suspension pre-reduction furnace and the burning heat provided by the coal gas burning oxygen gun in the smelting furnace are employed sufficiently in the present invention for compensating the heat required by the melting and reduction reaction to accelerate melting the iron-containing material, and then the productivity is improved.

According to the present invention, molten steel with a carbon content of 0.01 to 0.40wt% and temperature that are both competent to be provided to RH or LF refining furnace directly, can be obtained directly to achieve the whole continuous steel-making.

The continuous steel-making apparatus composed of the compacted rotary hearth furnace or suspension pre-reduction furnace, the smelting furnace and the oxygen-blowing furnace in the present invention achieves to produce the qualified molten steel directly from ores or iron-containing material. Compared to the long procedure in the prior art, the invest of the apparatus and buildings are reduced by over 60%, the land occupied is economized over 2/3, the logistics can be simplified sufficiently, the energy and exhausts are reduced by over about 60%, the continuous and self-controlled production can be easily achieved, and the service life of the furnace can be prolonged to over 20 years, all of which can be considered as a process revolution of the steel metallurgy industry.

### BRIEF DESCRIPTION OF THE DRAWING

The examples of the present invention will be illustrated in details below in company with the drawings, wherein,
Fig. 1 is the scheme of Example 1 (no representation of the claimed invention);
Fig. 2 is the top view of the interior of the smelting furnace (no representation of the claimed invention);
Fig. 3 is the scheme of Example 2 (no representation of the claimed invention);
Fig. 4 is the scheme of Example 4 (no representation of the claimed invention);
Fig. 5 is the scheme of Example 5 (no representation of the claimed invention);
Fig. 6 is the scheme of one example in the present invention;
Fig. 7 is the scheme of Example 6 in the present invention; and
Fig. 8 is the scheme of Example 7 in the present invention.

### SYMBOL LISTING OF THE DRAWINGS

1. rotary hearth furnace, 2. screw discharging machine of the rotary hearth furnace, 3. out-feeding hopper of the rotary hearth furnace, 4. hopper for flux, 5. primary screw conveyor, 6. intermediate stocking tank, 7. secondary screw conveyor, 8. serial type distributor, 9. smelting furnace, 10. coal gas output member, 11. coal gas-oxygen burning gun, 12. coal-oxygen gun, 13. argon gas gun, 14. outlet for slag of the smelting furnace, 15. tapholeat the bottom of the smelting furnace, 16. water-cooled furnace wall of the smelting furnace, 17. refractory-material furnace wall of the smelting furnace, 18. siphon outlet for steel, 19. water-cooled furnace wall of the siphon outlet for steel, 20. refractory-material furnace wall of siphon outlet for steel, 21. oxygen-blowing furnace, 22. oxygen gun of the oxygen-blowing furnace, 23. coal gas-outputting member of the oxygen-blowing furnace, 24. flux-inputting member of the oxygen-blowing furnace, 25. cover of the oxygen-blowing furnace, 26. outlet for slag of the oxygen-blowing furnace, 27. outlet for steel of the oxygen-blowing furnace, 28. taphole of the oxygen-blowing furnace, 29. water-cooled furnace wall of oxygen-blowing furnace, 30. refractory-material furnace wall of the oxygen-blowing furnace, 31. blowing oxygen gas permeable bricks of the oxygen-blowing furnace, 32 and 33. blowing oxygen gas permeable bricks of the smelting furnace, 34. high-temperature delivery vehicle, 35.track of the delivery vehicle, 36. unloaded hopper, 37. suspension pre-reduction furnace, 38. sending tank, 39. delivery pipe, 40. micro-powder spraying gun for iron-containing material, 41. molten steel, 42. steel slag, 91. high-temperature stocking hopper, 92. sending tank, 93. delivery pipe, 94. collecting tank, 95 serial type distributor, 96. smelting furnace, 97. coal-gas outputting device, 98. oxygen gun of the molten pool, 99. CO-oxygen burning gun, 910. spraying gun, 911. spraying gun for carbon-containing material, 912. oxygen gun of the smelting furnace, 913. outlet for slag of the smelting furnace, 914 siphon outlet for steel of the smelting furnace, 915. taphole at the bottom of the smelting furnace, 916. oxygen-blowing furnace, 917. oxygen gun of the oxygen-blowing furnace, 918. burning gun for carbon-containing material in the oxygen-blowing furnace, 919. flux-adding system of the oxygen-blowing furnace, 920. outlet for steel of the oxygen-blowing furnace, 921. outlet for slag of the oxygen-blowing furnace, 922. taphole at the bottom of the oxygen-blowing furnace, 923. coal gas-outputting device of the oxygen-blowing furnace.

### EMBODIMENTS

The present invention will be further illustrated in company with the following examples, but is not limited by the examples.

### Example 1 (not part of the invention):

Iron-containing materials: agglomerates formed by iron-ore micro powders and adhesive etc;

### Carbon-containing materials: coal powders

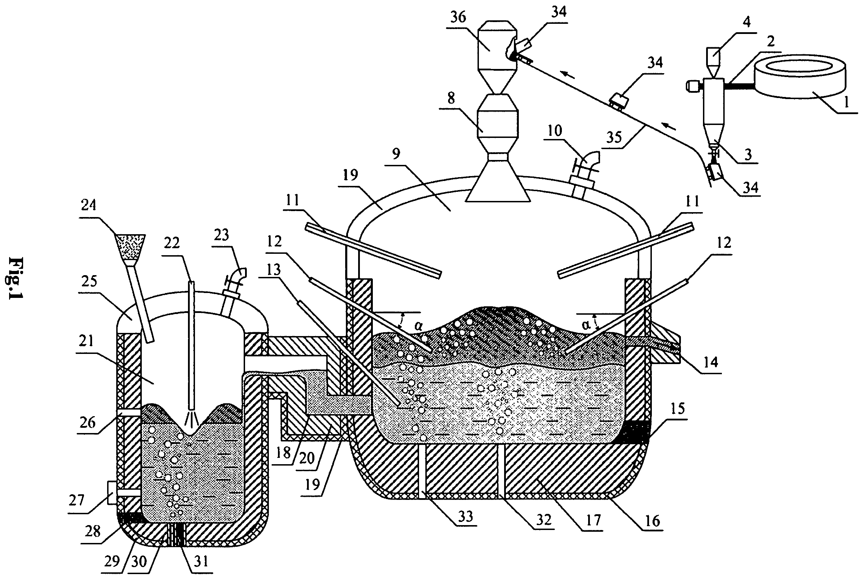

As shown in Fig 1, in the continuous steel-making apparatus of the present invention, a molten pool is formed in the smelting furnace, in which the lower layer is the molten steel 41, and the upper layer is the steel slag 42. This apparatus comprises the smelting furnace 9 and the oxygen-blowing furnace 21, and the smelting furnace 9 and the oxygen-blowing furnace 21 are in communication with each other by the siphon outlet for steel 18 of the smelting furnace. A high-temperature feeding system is arranged over the smelting furnace 9, and the upper part of the smelting furnace 9 is provided with the coal gas-oxygen burning gun 11, the coal-oxygen gun 12, the argon gas gun 13, and the lower part of the smelting furnace is provided with the outlet for slag of the smelting furnace 14, the taphole at the bottom of the smelting furnace 15, the watercolded furnace wall of the smelting furnace 16, the refractory-material furnace wall of the smelting furnace 17, and the cover of the smelting furnace 19. 18 is the siphon outlet for steel of the smelting furnace, 19 is the water-colded furnace wall of the siphon outlet for steel of the smelting furnace, 20 is the refractory-material furnace wall of the siphon outlet for steel of the smelting furnace, and 32 and 33 are blowing oxygen gas permeable bricks at the bottom of the smelting furnace. The oxygen-blowing furnace 21 is provided with the oxygen gun of oxygen-blowing furnace 22, the flux-inputting member of the oxygen-blowing furnace 24, the cover of the oxygen-blowing furnace 25, the outlet for slag of the oxygen-blowing furnace 26, the outlet for steel of the oxygen-blowing furnace 27, the taphole at the bottom of the oxygen-blowing furnace 28, the water-colded furnace wall of the oxygen-blowing furnace 29, the refractory-material furnace wall of the oxygen-blowing furnace 30, and the blowing oxygen gas permeable bricks at the bottom of the oxygen-blowing furnace 31. Features and elements known in the prior art can also be arranged by a person skilled in the art as required.

As shown in the longitudinal section view in Fig. 1, the high-temperature pre-reduced agglomerates are charged into the high-temperature delivery vehicle 34 through the rotary hearth furnace 1, especially through the screw discharging machine of the rotary hearth furnace 2, the out-feeding hopper of the rotary hearth furnace 3, and then are sent to the unloaded hopper 36 by the track of the delivery vehicle 35. The unloaded hopper 36 is in communication with the cover of the smelting furnace 19 by the serial-type distributor 8. The hopper for flux 4 is arranged over the out-feeding hopper of the rotary hearth furnace 3.

The materials are sent to the unloaded hopper 36 by the rotary hearth finance 1 through the screw discharging machine of the rotary hearth furnace 2, out-feeding hopper of the rotary hearth furnace 3 (the hopper for flux is arranged over the out-feeding hopper of the rotary hearth furnace 3), the high-temperature delivery vehicle 34 and the track of the delivery vehicle 35. The unloaded hopper 36 is in communication with the cover of the smelting furnace 19 by the serial type distributor 8, and the pre-reduced agglomerates are added into the foam-slag-boiling zone of the smelting furnace, i.e. the distribution zone.

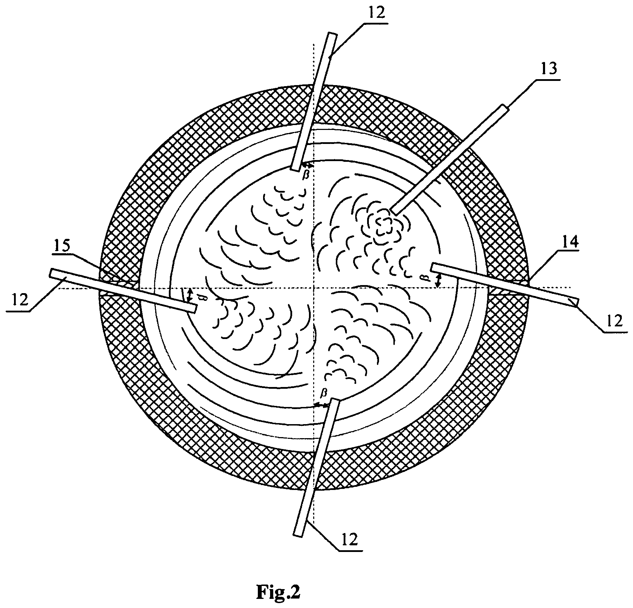

The high-temperature flames from two coal gas oxygen burning guns 11 on both side walls of the upper part of the smelting furnace are sprayed to the distribution zone on the steel slag, and then heat the pre-reduced iron ore and flux. Four coal oxygen guns 12 on the side walls of the smelting furnace form α angle of 25 degree with the horizontal of the steel slag layer, i.e. α=25° as shown in Fig 1. Meanwhile, these guns are inserted into the steel slag downwards with β angle of 15 degree between the guns and the normal direction of the inner surface of the smelting furnace body, and as shown in Fig. 2, β=15°. The blowing of the coal-oxygen gun forms the foam-slag-boiling zone in the slag layer. Here, the coal-oxygen gun is arranged as the β angle described above so that the foam-slag-boiling zone rotates counter-clockwise. But it can be contemplated that the β angle of the guns can be adjusted to make the foam-slag-boiling zone not rotate or rotate clockwise. The foam-slag-boiling zone provides sufficient physical and chemical reaction kinetic conditions and melting heat for the pre-reduced iron-containing materials and the flux. The outlet for slag 14 at the upper part of the side wall of the smelting furnace is located at the upper limit location of the steel-slag layer for achieving to exhaust the slag continuously. The argon gas gun 13 of the smelting pool is inserted into the smelting pool to agitate it. The blowing oxygen gas permeable bricks at the bottom of the smelting furnace 32 and 33 blow oxygen continuously to the molten steel to decarbonize the molten steel, and to increase the temperature of the molten steel and to agitate the molten pool. The siphon outlet for steel 18 at the lower part outside the smelting furnace ensures to exhaust steel continuously without slag to the oxygen-blowing furnace 21. The oxygen gun 24 at the upper part of the oxygen-blowing furnace 21 is used to blow the molten steel by blowing oxygen, so that the carbon content (0.01 to 0.04 wt%) and the temperature of the molten steel meet the requirements of RH or LF smelting furnace. The flux-inputting member of the oxygen-blowing furnace 24 adds slag-making agents such as caustic lime, fluorite and the like to the oxygen-blowing furnace to further remove the sulfur and phosphor from the molten steel while keeping the temperature. Before exhausting steel without slag from the outlet for steel 27 which is at the lower part of the side wall of the oxygen-blowing furnace, a certain amount of slag can be exhausted when the molten steel approaches the height of the outlet for slag 26 at the upper part of the oxygen-blowing furnace..

The depth of the molten steel in the molten pool of the smelting furnace is between about 700mm and about 800mm, and the temperature thereof is between about 1450°C and 1550°C. The thickness of the molten slag layer is between about 800 and about 1000mm, and the temperature thereof is between1550°C and 1650°C.

The sulfur and phosphor amount contained in the coal powders sprayed to the molten slag by the coal-oxygen gun should be as low as possible, and typically the carbon content is kept above 77wt%. One part of the coal powders blown in burn in the oxygen gas blown in, producing a great deal of heat, which in turn can be used for melting the pre-reduced iron ore and the flux, and one part of the coal powders conduct reduction reaction continuously with the liquid FeO in the steel slag, as well as another small part of them enter the molten iron to permeate carbon toward it. The coal powders and the oxygen gas are blown into the middle of the steel slag layer simultaneously to mix the high-temperature smelting slag and the pre-reduced iron ore, the flux powders, the carbon powders violently, in order to establish good kinetic conditions for the fast melting of the pre-reduced iron ores and the flux as well as the continuous reduction reaction of the carbon reducing liquid iron oxides. The dissolved carbon in the molten iron also reduces FeO in the steel slag continuously at the interface of mixed slag and steel. The oxidization of the molten slag and the molten steel is controlled by adjusting the coal-oxygen ratio in the coal-oxygen gun to obtain molten steel with a carbon content of 2.0 to 3.0wt%, phosphor content less than 0.020wt%, and sulfur content less than 0.05wt%. In the oxygen-blowing furnace, the flux is added into the oxygen-blowing furnace in the amount of 40 to 70 kg per 1000kg steel, to make slag and conduct desulfurization and dephosphorization, and the basicity of the slag is controlled within 3.0-5.0. The carbon content and the temperature of the molten steel meet the requirements of RH or LF refining furnace respectively by blowing oxygen, producing molten steel comprising the following components: C, 0.01 to 0.40%; Si, less than 0.01%; Mn, less than 0.02%; S, P, less than 0.010%; and the temperature of the molten steel is between 1580°C and 1680°C.

The heat produced by the secondary combustion of CO, which is produced by the combustion and the reduction reaction of the coal powders in the molten slag in the smelting furnace, is delivered to the pre-reduced agglomerates and the flux in the foam-slag-boiling zone in the manner of radiation and heat conduction, and consequently, the melting speed of the raw materials is further accelerated.

The waste gas and residue heat produced by the smelting furnace 9 and the oxygen-blowing furnace 21 are recycled to generate electricity. The coal gas can be used to preheat the raw material and be used as the fuel in the rotary hearth furnace and so on, and CO₂ is recycled to utilize. The steel slag is used to produce cement, steel slag micro-powders and so on.

### Example 2 (not part of the invention):

The procedure is the same as the one in Example 1, except for:
Iron-containing materials: 50% are iron ore powders, and 50% are iron-containing metallurgy powders and dusts;
Carbon-containing material: coal powders.

The composition of the iron-containing metallurgy powders and dusts: milliscale, blast furnace dusts, rotary hearth furnace dusts, electrical furnace dusts, and sintering agglomerate dusts and the like.

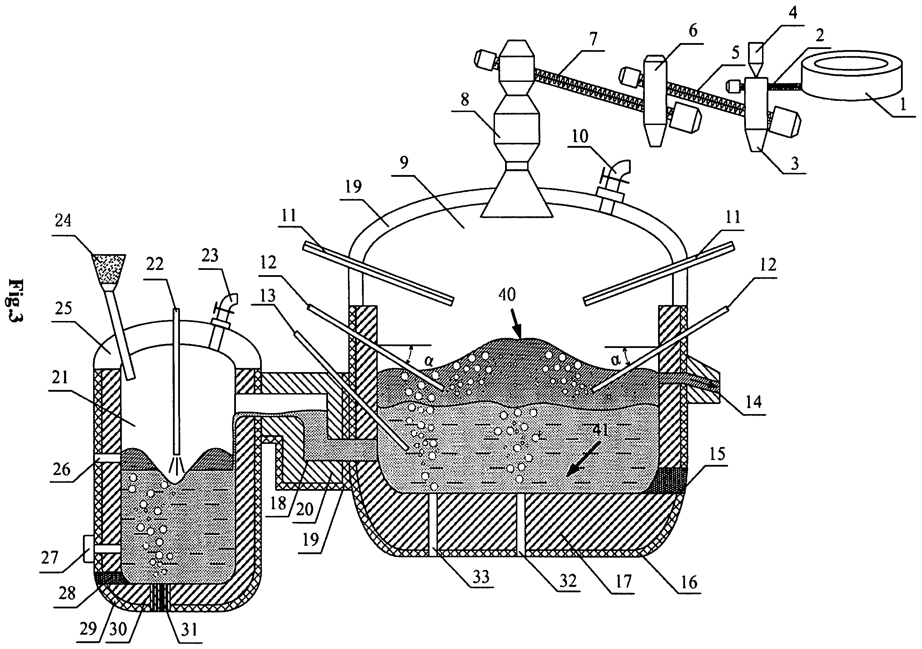

Agglomerates are made by the iron ore powders, the iron-containing metallurgy dusts and adhesives and the like, which are, after being pre-reduced by the rotary hearth furnace, added into the smelting furnace with caustic lime and dolomite as the flux.
As shown in Fig. 3, the pre-reduced agglomerates in the rotary hearth furnace 1 are delivered to out-feeding hopper of the rotary hearth furnace 3 by the screw discharging machine of the rotary hearth furnace 2, and then the pre-reduced agglomerates with the temperature of 800-900°C together with the flux such as caustic lime and dolomite are delivered to the serial type distributor 8 over the smelting furnace 9 by the high-temperature primary screw conveyor 5, the intermediate stocking tank 6, and the high-temperature secondary screw conveyor 7, before being added to the boiling molten slag distribution zone of the smelting furnace by the serial type distributor 8. The hopper forflux 4 is arranged over the out-feeding hopper of the rotary hearth furnace 3.

The coal-oxygen gun 12 on the side wall of the smelting furnace forms an angle of 30 degree with the horizontal of the slag layer, which is shown as α angle in Fig. 1, and meanwhile the coal-oxygen gun 12 is inserted into the slag in the intermediate layer of the slag zone with an angle of 0 degree relative to the diameter direction of the smelting furnace at the insertion point, i.e. β=0.

### Example 3 (not part of the invention):

The procedure is the same as the one in Example 1, except for:
Iron-containing material: all are iron-containing metallurgy powders and dusts;
Carbon-containing material: one or more of coke furnace coal gas, blast furnace coal gas, natural gas, and produced coal gas.

One or more of coke furnace coal gas, blast furnace coal gas, natural gas, and produced coal gas are sprayed by the coal-oxygen gun 12 in. The coal-oxygen gun 12 on the side wall of the smelting furnace is inserted into the middle of the steel slag inclined downwards with an angle of 45 degree with the horizontal, i.e. α=45°, and meanwhile with an angle of 30° with the normal direction of the inner surface of the smelting furnace body, i.e. β=30° as shown in Fig. 2.

### Example 4 (not part of the invention):

The procedure is the same as the one in Example 1, expect for:
Iron-containing material: iron ore micro-powders;
Carbon-containing material: coal powders.

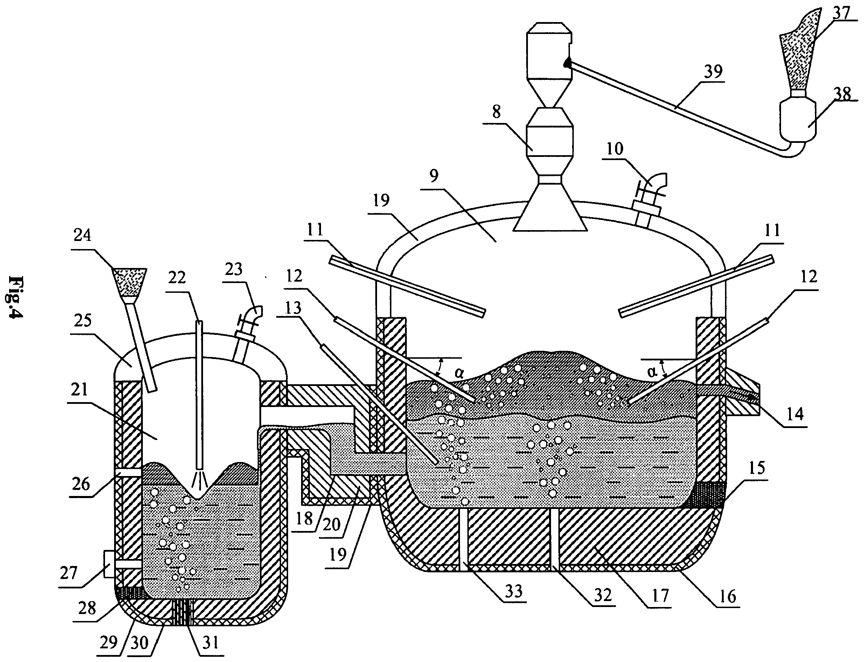

As shown in Fig. 4, in the continuous steel-making apparatus of the present invention, the rotary hearth furnace 1 is replaced by the suspension pre-reduction furnace 37. The high-temperature delivery bed connected with the suspension pre-reduction furnace 37 comprises the sending tank 38 and the high-temperature delivery pipe 39, and the high-temperature delivery pipe 39 is connected with the serial type distributor 8. The pre-reduced iron-containing micro-powders with the temperature of 600°C to 800°C and the metallization of 85% are added into the smelting furnace 9, i.e. added into the foam-slag-boiling zone in the smelting furnace.

### Example 5 (not part of the invention):

The procedure is the same as the one in Example 1, except for:
Iron-containing material: iron ore micro-powders;
Carbon-containing material: coal powders.

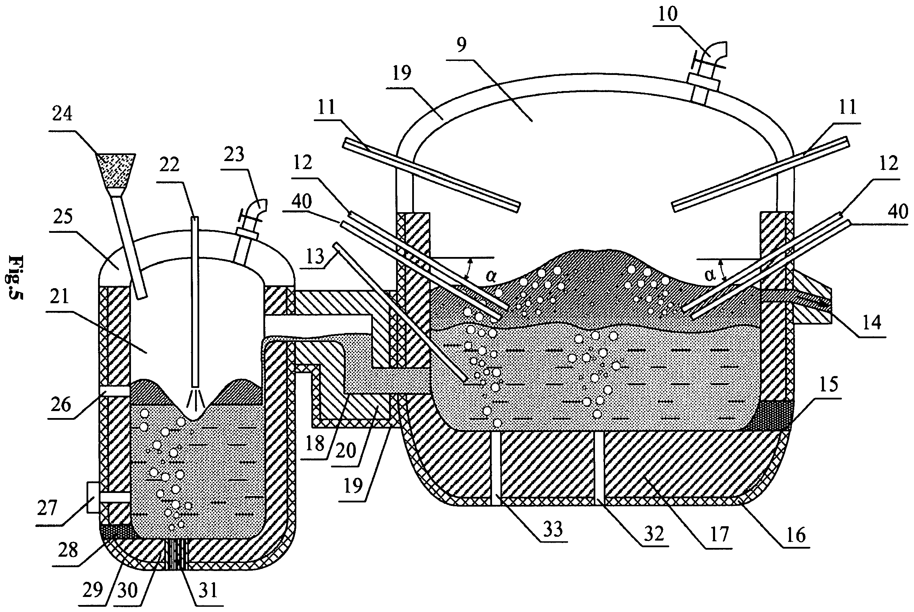

As shown in Fig. 5, in the continuous steel-making apparatus of the present invention, the rotary hearth furnace 1 is replaced by the suspension pre-reduction furnace 37. The pre-reduced iron-containing micro-powders with the temperature of 600°C to 800°C and the metallization of 85% are added to the foam-slag-boiling zone in the smelting furnace 9 by micro-powder spraying gun for iron-containing material 40.

### Example 6:

Iron-containing materials: iron ore micro-powders; Carbon-containing material: coal powders.
In this example, a high-temperature dense phase delivery bed and a serial type distributor are applied.

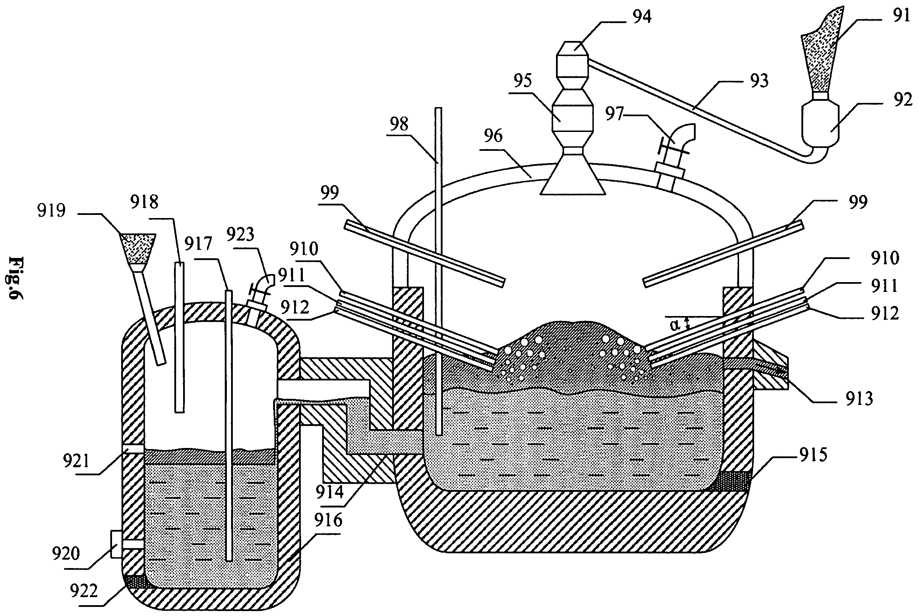

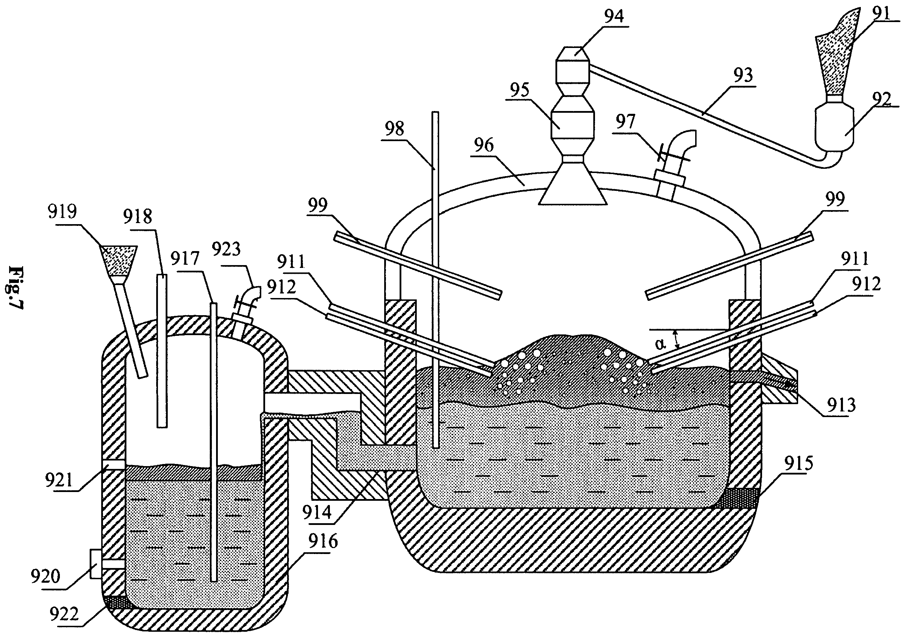

The continuous steel-making apparatus of the present invention comprises the high-temperature stocking hopper 91 accommodating mixed iron-containing material and flux in connection with the suspension pre-reduction furnace, the sending tank 92, the delivery pipe 93, the collecting tank 94, the serial type distributor 95, the smelting furnace 96, the coal-gas outputting device 97, the oxygen gun of the molten pool 98, the CO-oxygen burning gun 99, the spraying gun for carbon-containing material 911, the oxygen gun of the smelting furnace 912, the outlet for slag of the smelting furnace 913, the siphon outlet for steel of the smelting furnace 914, the taphole at the bottom of the smelting furnace 915, the oxygen-blowing furnace 916, the oxygen gun of the oxygen-blowing furnace 917, the burning gun for carbon-containing material of the oxygen-blowing furnace 918, the flux-adding system of the oxygen-blowing furnace 919, the outlet for steel of the oxygen-blowing furnace 920, the outlet for slag of the oxygen-blowing furnace 921, the taphole at the bottom of the oxygen-blowing furnace 922, the coal gas-outputting device 923 arranged on the top of the oxygen-blowing furnace; and the smelting furnace 96 and oxygen-blowing furnace 916 are in the form of cylinder, as shown in section view in Figs. 6 or 7. The smelting furnace 96 and the oxygen-blowing furnace 916 comprise a durable material system, a water-colded system, a waste-treating system and a residue heat-recycled system. Wherein, the difference between Fig. 6 and Fig. 7 lies in that: besides the iron-containing materials are added by the serial type distributor, the iron-containing material and the flux are also sprayed to the steel slag by using spraying gun in Fig. 6.

The pre-reduced iron ore micro-powders and flux (e.g. caustic lime, dolomite) micro-powders that are in the temperature of between 400°C and 800°C and produced by the suspension pre-reduction furnace, are delivered to the serial type distributor 95 over the smelting furnace 96 by the high-temperature stocking hopper 91 accommodating the mixed iron-containing materials and flux and connected with the suspension pre-reduction furnace by the high-temperature dense phase delivery bed, the sending tank 92, the delivery pipe 93 and the collecting tank 94, and then added into the distribution zone above the slag surface in the smelting furnace by the distributor 95. The high-temperature flames are sprayed to the distribution zone above the slag surface by two CO-oxygen burning guns 99 on the two side walls at the upper part of the smelting furnace, to heat the iron ore micro-powders and the flux micro-powders. The spraying guns for carbon-containing material 911 on the side walls of the smelting furnace are arranged immediately above the oxygen guns of the smelting furnace. The spraying guns for carbon-containing material 911 and the oxygen guns are arranged up and down, both of which form an angle of 15-60 degree with the horizontal of the slag layer and form an angle of 0-45 degree with the diameter direction of the smelting furnace, and are inserted into the slag in the slag zone with β angle as shown in Fig. 2. The boiling zone is formed from the slag layer when blowing, and the angle of the spraying guns can be adjusted to make the boiling zone not rotate, or rotate clockwise or counter clockwise. The boiling zone provides sufficient physical and chemical reaction kinetic conditions for the iron ore micro-powders and the flux micro-powders. The outlet for slag 913 at the upper part of the wall of the smelting furnace is arranged at the upper limit position of the slag layers to achieve exhausting slag continuously. The oxygen gun 98 of the molten pool is inserted into the molten steel in front of the siphon outlet for steel 914 in the smelting pool, to blow oxygen into the molten steel in order to further reduce the carbon content in the molten steel and increase the temperature of the molten steel, and resulting CO gas has an effect of agitating the molten pool in the smelting furnace. The siphon outlet for steel 913 and the siphon outlet for steel 914 at the lower part of the outer side wall of the smelting furnace ensure to exhaust the steel continuously to the oxygen-blowing furnace 916. The oxygen gun 917 at the upper part of the oxygen-blowing furnace 916 blows the molten steel to make the carbon content (0.01-0.40%) in the steel and the temperature of the steel meet the requirements of RH or LF refining furnace. CO or the combustible gas produced by the smelting furnace burns because of the effect of the burning gun for carbon-containing material 918 of the oxygen-blowing furnace , thus providing heat for maintaining or increasing the temperature of the molten steel in the oxygen-blowing furnace. The flux-adding system of the oxygen-blowing furnace 919 adds slag-making agent such as caustic lime, dolomite and the like to the oxygen-blowing furnace, to further remove the sulfur and phosphor from the molten steel while keeping the temperature. When the molten steel reaches the height of the outlet for slag 921 at the upper part of the wall of the oxygen-blowing furnace, a certain amount of slag is exhausted previously, and then the outlet for steel 920 at lower part of the wall of the oxygen-blowing furnace achieves exhausting steel without slag.

Iron ore refining powders, caustic lime and dolomite are milled finely into the micro-powders of 10-40µm by the ball milling machine. The iron ore micro-powders are pre-reduced at the temperature of 600-1000°C in the suspension pre-reduction furnace to obtain the pre-reduced iron ore micro-powders with the pre-reduction ratio of 85-97%. The mixing ratio of the pre-reduced iron ore refining powders, caustic lime and dolomite is determined by controlling the slag components of several material during the metallurgy process. A typical basicity of the slag is 1-1.5, Al2O3: 13%-16%, MgO: 8-10%, FeO: less than 0.5%, CaO: 38%-40%, SiO2: 32-34%.

The thickness of the slag layer in the smelting furnace is about 700mm-1000mm, the temperature thereof is about 1450°C-1550°C, and the depth of the molten steel in the molten pool is about 700mm. After being added in, the mixture of the iron ore micro-powders and the flux melt into the slag within 5 to 30 seconds.

The sulfur and phosphor amount contained in the coal powders sprayed to the molten slag by the water-colded gun and with N2 or CO taken as carrier gases should be as low as possible, and typically the carbon content is kept above 77wt%. One part of the coal powders blown in burn in the oxygen gas blown in, producing a great deal of heat, which in turn can be used for melting the pre-reduced iron ore micro-powders and the flux, and one part of the coal powders conduct reduction reaction continuously with the liquid FeO in the steel slag, as well as another small part of them enter the molten iron to permeate carbon toward it. The coal powders and the oxygen gas are blown into the middle and upper part of the steel slag layer simultaneously to mix the high-temperature smelting slag and the pre-reduced iron ore micro-powders, the flux micro-powders, the carbon powders violently, by which good kinetic conditions are established for the fast melting of the pre-reduced iron ores micro-powders and the flux micro-powders as well as the continuous reduction reaction of the carbon reducing liquid iron oxides. The dissolved carbon in the molten iron also reduces FeO in the reduced smelting slag continuously at the interface of mixed slag and steel. The oxidization of the molten slag and the molten steel is controlled by blowing oxygen to the smelting slag and the molten steel, to obtain molten steel with a carbon content of 1.0 to 3.5wt%. In the oxygen-blowing furnace, the flux is added into the oxygen-blowing furnace in the amount of 40 to 70 kg per 1000kg steel, to make slag and conduct desulfurization and dephosphorization, and the basicity of the slag is controlled within 3.0-5.0. By blowing oxygen, the carbon content and the temperature of the molten steel meet the requirements of RH or LF refining furnace respectively, producing molten steel comprising the following components: C, 0.01 to 0.40%; Si, less than 0.05%; Mn, less than 0.30%, S, P, less than 0.010%; and the temperature of the molten steel is between 1580°C and 1680°C.

The heat produced by the secondary combustion of CO, which is produced by the combustion and the reduction reaction of the coal powders in the molten slag in the smelting furnace, is delivered to the pre-reduced iron ore micro-powders and the flux micro-powders in the distribution zone in the manner of radiation and heat conduction, and consequently, the melting speed of the raw materials is further accelerated.
The waste gas and residue heat produced by the smelting furnace 96 and the oxygen-blowing furnace 916 are recycled to generate electricity. CO2 absorbed is used to preheat and pre-reduce the iron ore micro-powders and the like, and then CO2 is recycled. The steel slag is used to produce cement, steel slag micro-powders and so on.

### Example 7:

The procedure is the same as the one in Example 6, except for:
Iron-containing material: 80% are iron ore micro-powders, 20% are iron-containing metallurgy powders and dusts; Carbon-containing materials: coal powders.
The iron-containing materials and the flux are sprayed into the furnace by using spraying gun.

The composition of the iron-containing metallurgy powders and dusts: millscale, blast furnace dusts, rotary furnace dusts, electrical furnace dusts, and sintering agglomerate dusts and the like.

Two and more of iron ore micro-powders, millscale, blast furnace dusts, rotary furnace dusts, electrical furnace dusts and sintering agglomerate dusts together with caustic lime and dolomite are milled into the micro-powders of 10-40 µm.

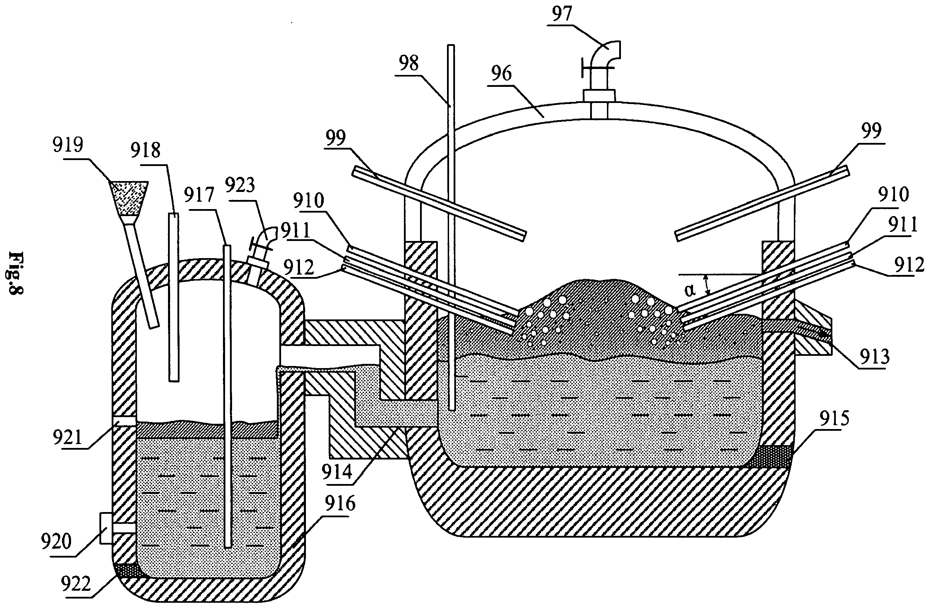

The continuous steel-making apparatus of the present invention comprises: the smelting furnace 96, the coal-gas outputting device 97, the oxygen gun of the molten pool 98, the CO-oxygen burning gun 99, the spraying gun for iron-containing material and flux 910, the spraying gun for carbon-containing material 911, oxygen gun of the smelting furnace 912, the outlet for slag of the smelting furnace 913, the siphon outlet for steel of the smelting furnace 914, the taphole at the bottom of the smelting furnace 915, the oxygen-blowing furnace 916, the oxygen gun of the oxygen-blowing furnace 917, the burning gun for carbon-containing material in the oxygen-blowing furnace 918, the flux-adding system of the oxygen-blowing furnace 919, the outlet for steel of the oxygen-blowing furnace 920, the outlet for slag of the oxygen-blowing furnace 921, the taphole at the bottom of the oxygen-blowing furnace 922, and the coal gas-outputting device 23. The smelting furnace 96 and the oxygen-blowing furnace 916 are in the form of cylinder, as shown in section view in Fig. 8. The smelting furnace 96 and the oxygen-blowing furnace 916 comprise a durable material system, a water-colded system, a waste-treating system and a residue heat-recycled system.

### Example 8:

The procedure is the same as the one in Example 7, except for:
Iron-containing materials: 10%~90% are iron ore micro-powders, 90%~10% are iron-containing metallurgy powders and dusts; Carbon-containing materials: one or more of natural gas, combustible ice, coke oven gas, and produced coal gas. The iron-containing material and the flux are sprayed into the furnace by using spraying gun.

The gas sprayed by the spraying gun 911 for carbon-containing materials into the slag layer is one or more of natural gas, combustible ice, coke oven gas, and produced coal gas.

The preferred examples are described above in company with the drawings. However, amendments, improvements and alternatives can be made by a person skilled in the art according to the examples of the present invention as well as several examples can be combined by a person skilled in the art, without going beyond the scope of the present invention. Especially the illustrations for the number (e.g. one or two) of the features in the description are typically exemplary but not limiting, unless particularly indicated. The appropriate number of the features can be arranged by a person skilled in the art based on the technical motivation of the present invention. Therefore, all the examples described above and the amendments, improvements, alternatives and combinations thereof are all covered by the appending claims, and the scope of the present invention is just defined by the appending claims and it equivalents.

## Claims

1. A continuous steel-making apparatus, comprising:
a pre-reduction device for pre-reducing an iron-containing material,
a smelting furnace (96), comprising
a furnace body for accommodating molten steel and steel slag over the molten steel,
a feeding member for feeding the iron-containing material pre-reduced by the pre-reduction device into the furnace body, and
an outlet for steel for exhausting the molten steel from the furnace body, and
the smelting furnace (96) further comprises at least one spraying gun for carbon-containing material (911) with the muzzle thereof inserted into the steel slag for spraying a carbon-containing material to the steel slag;
and the smelting furnace (96) further comprises at least one oxygen gun of the smelting furnace (912) with the muzzle thereof inserted into the steel slag for blowing oxygen gas to the steel slag, and by spraying the carbon-containing material and blowing the oxygen gas, a foam-slag-boiling is formed in the steel slag;
and at least one CO-oxygen burning gun (99) inserted into the furnace body with the muzzle thereof located above the steel slag;
and the feeding member is arranged to feed the iron-containing material pre-reduced into the foam-slag-boiling zone and
wherein the feeding member comprises a spray gun inserted into the foam-slag-boiling zone for spraying the iron-containing material therein, and/or a serial type distributor (95) aimed at the foam-slag-boiling zone for feeding the iron-containing material; and,
a molten steel-treating vessel, which is in communication with the outlet for steel of the smelting furnace and is used to receive the molten steel from the smelting furnace (96) and decarbonize, desulfurize and dephosphorize the molten steel,
wherein the spraying gun for carbon-containing material (911) and the oxygen gun of the smelting furnace (912) are arranged in one of the following modes:
(a) the at least one spraying gun for carbon-containing material (911) is arranged immediately above the at least one oxygen gun of the smelting furnace (912), and the at least one spraying gun for carbon-containing material (911) and the at least one oxygen gun of the smelting furnace (912) are arranged up and down; or
(b) the spraying gun for carbon-containing material (911) and the oxygen gun of the smelting furnace (912) are configured into a coal-oxygen gun in sleeve form, wherein the inner tube is used for delivering the carbon-containing material, and the outer tube is used for delivering oxygen gas, wherein the coal-oxygen gun is arranged to insert the muzzle thereof at the height of 1/5 to 1/3 above from the bottom of the steel slag, and/or wherein the coal-oxygen gun is arranged to form an α angle relative to the horizontal inclined downwards, and the horizontal projection of the coal-oxygen gun forms a β angle relative to the normal direction of the inner surface of the furnace body at the insertion point, wherein the α angle is in the range of 15° to 60°, and the β angle is in the range of 0° to 45°.

2. The steel-making apparatus according to claim 1,
**characterized in that** when the spraying gun for carbon-containing material (911) and the oxygen gun of the smelting furnace (912) are arranged in the mode (a), the at least one oxygen gun of the smelting furnace (912) is arranged to form an α angle relative to the horizontal inclined downwards, and the horizontal projection of the oxygen gun of the smelting furnace forms a β angle relative to the normal direction of the inner surface of the furnace body at the insertion point, wherein the α angle is in the range of 15° to 60°, and the β angle is in the range of 0° to 45°; and/or
**characterized in that** the at least one oxygen gun of the smelting furnace (912) comprises a plurality of oxygen guns of the smelting furnace arranged uniformly around the furnace body; and/or
**characterized in that** the at least one spraying gun for carbon-containing material (911) is arranged to form an α angle relative to the horizontal inclined downwards, and the horizontal projection of the spraying gun for carbon-containing material (911) forms a β angle relative to the normal direction of the inner surface of the furnace body at the insertion point, wherein the α angle is in the range of 15° to 60°, and the β angle is in the range of 0° to 45°.

3. The steel-making apparatus according to claim 1 or 2, **characterized in that** when the spraying gun for carbon-containing material (911) and the oxygen gun of the smelting furnace (912) are arranged in the mode (a), the at least one spraying gun for carbon-containing material (911) comprises a plurality of spraying guns for carbon-containing material arranged uniformly around the furnace body.

4. The steel-making apparatus according to any of claims 1 to 3,
**characterized in that**, when the spraying gun for carbon-containing material and the oxygen gun of the smelting furnace are arranged in the mode (b), the coal-oxygen gun comprises a plurality of coal-oxygen guns arranged uniformly around the furnace body.

5. The steel-making apparatus according to any of claims 1 to 4, **characterized in that** the pre-reduction device includes a rotary hearth furnace and/or a suspension pre-reduction furnace.

6. The steel-making apparatus according to any of claims 1 to 5, **characterized in that** the molten steel-treating vessel comprises an oxygen-blowing furnace (916) with an oxygen-blowing gun (917).

7. A steel-making process, comprising the steps of:
i) forming a molten pool composed of molten steel as the lower layer and steel slag as the upper layer in a smelting furnace (96) comprising an outlet for steel,
ii) spraying a carbon-containing material into the steel slag in the smelting furnace (96) by using at least one spraying gun for carbon-containing material (911) with the muzzle thereof inserted into the steel slag, and blowing oxygen gas into the steel slag in the smelting furnace by using at least one oxygen gun of the smelting furnace (912) with the muzzle thereof inserted into the steel slag, wherein the carbon-containing material and oxygen gas conduct a burning-exothermal reaction in the steel slag, and the gas produced by the burning-exothermal reaction and the impact force formed by the blowing of the coal-oxygen gun are applied to the steel slag together to form a foam-slag-boiling zone in the steel slag;
iii) adding an iron-containing material into the foam-slag-boiling zone; and
iv) exhausting steel from the smelting furnace (96) through the outlet for steel
wherein the spraying gun for carbon-containing material (911) and the oxygen gun of the smelting furnace (912) are arranged in one of the following modes:
(a) the at least one spraying gun for carbon-containing material (911) is arranged immediately above the at least one oxygen gun of the smelting furnace (912), and the at least one spraying gun for carbon-containing material (911) and the at least one oxygen gun of the smelting furnace (912) are arranged up and down; or
(b) the spraying gun for carbon-containing material (911) and the oxygen gun of the smelting furnace (912) are configured into a coal-oxygen gun in sleeve form, wherein the inner tube is used for delivering the carbon-containing material, and the outer tube is used for delivering oxygen gas, wherein the coal-oxygen gun is arranged to insert the muzzle thereof at the height of 1/5 to 1/3 above from the bottom of the steel slag, and/or wherein the coal-oxygen gun is arranged to form an α angle relative to the horizontal inclined downwards, and the horizontal projection of the coal-oxygen gun forms a β angle relative to the normal direction of the inner surface of the furnace body at the insertion point, wherein the α angle is in the range of 15° to 60°, and the β angle is in the range of 0° to 45°.

8. The process according to claim 7,
**characterized in that** the step ii) comprises burying the flame from the burning reaction of coal and oxygen in the steel slag so that the heat emitted from the reaction is absorbed by the slag; wherein, in the step iv), the outlet for steel includes a siphon outlet for steel (914); and/or
**characterized in that** the depth of the molten steel in the smelting furnace (96) is in the range of 500mm-1000mm, and the thickness of the steel slag is in the range of 500mm-1500mm.

9. The process according to claim 7 or 8,
**characterized in that** when the spraying gun for carbon-containing material (911) and the oxygen gun of the smelting furnace (912) are arranged in the mode (b), the step ii) comprises blowing the carbon-containing material and oxygen gas by using the coal-oxygen gun at the height of 1/3-1/5 above from the bottom of the steel slag, and the ratio between the oxygen gas and the carbon-containing material blown in by the coal-oxygen gun can be adjusted, wherein the ratio between the oxygen gas and the carbon-containing material is adjusted so that the carbon content of the steel slag maintains 3wt%-12wt%; and/or
**characterized in that** the spraying gun for carbon-containing material (911) and the oxygen gun of the smelting furnace (912) are configured into a coal-oxygen gun in sleeve form, wherein the inner tube is used for delivering the carbon-containing material, and the outer tube is used for delivering oxygen gas; and the step ii) comprises inserting the coal-oxygen gun into the steel slag inclined downwards with an α angle relative to the horizontal, and with a β angle between the horizontal projection of the coal-oxygen gun and the normal direction of the inner surface of the furnace body at the insertion point, to make the steel slag rotate, wherein the α angle is in the range of 15° to 60°, and the β angle is in the range of 0° to 45°.

10. The process according to any of claims 7 to 9, further comprising pre-reducing the iron-containing material by using a pre-reduction device before adding the iron-containing material into the foam-slag-boiling zone;
especially wherein the metallization ratio of the iron-containing material pre-reduced is 80wt% to 97wt%; and/or
especially wherein the pre-reduction device includes a suspension pre-reduction furnace and/or a rotary hearth furnace, wherein the temperature range of the iron-containing material pre-reduced by the suspension pre-reduction furnace is 400 °C-800°C, and the temperature range of the iron-containing material pre-reduced by the rotary hearth furnace is 900 °C-1200 °C.

11. The process according to any of claims 7 to 10, further comprising blowing oxygen to the molten steel flowing from the smelting furnace through the outlet for steel by an oxygen-blowing furnace (916) to desulfurize and dephosphorize the molten steel.

12. The process according to any of claims 7 to 11,
**characterized in that** when the spraying gun for carbon-containing material (911) and the oxygen gun of the smelting furnace (912) are arranged in the mode (b), the step ii) comprises inserting the at least one spraying gun for carbon-containing material into the steel slag inclined downwards with an α angle relative to the horizontal, and with a β angle between the horizontal projection of the spraying gun for carbon-containing material and the normal direction of the inner surface of the furnace body at the insertion point, to make the steel slag rotate, wherein the α angle is in the range of 15° to 60°, and the β angle is in the range of 0° to 45°; and/or
**characterized in that** the step ii) comprises inserting the at least one oxygen gun of the smelting furnace into the steel slag inclined downwards with an α angle relative to the horizontal, and with a β angle between the horizontal projection of the oxygen gun of the smelting furnace and the normal direction of the inner surface of the furnace body at the insertion point, to make the steel slag rotate, wherein the α angle is in the range of 15° to 60°, and the β angle is in the range of 0° to 45°.

13. A continuous steel-making process according to any of claims 7 to 12, comprising
i) forming a molten pool composed of molten steel as the lower layer and steel slag as the upper layer in a smelting furnace (96) comprising an outlet for steel;
ii) spraying a carbon-containing material into the steel slag in the smelting furnace by using at least one spraying gun for carbon-containing material (911) with the muzzle thereof inserted into the steel slag, and blowing oxygen gas into the steel slag in the smelting furnace by using at least one oxygen gun of the smelting furnace (912) with the muzzle thereof inserted into the steel slag, wherein the carbon-containing material and oxygen gas conduct a burning-exothermal reaction in the steel slag, and the gas produced by the burning-exothermal reaction and the impact force formed by the blowing of the coal-oxygen gun are applied to the steel slag together to form a foam-slag-boiling zone in the steel slag;
iii) adding an iron-containing material pre-reduced by a pre-reduction device into the foam-slag-boiling zone; and
iv) desulfurizing and dephosphorizing the molten steel exhausted from the outlet for steel, to obtain molten steel with a carbon content of 0.01 wt% to 0.40 wt%.

## Patentansprüche

1. Kontinuierliche Stahlherstellungsvorrichtung, umfassend:
eine Vor-Reduktionseinrichtung zum Vor-Reduzieren eines eisenhaltigen Materials,
einen Schmelzofen (96), bestehend aus
einem Ofenkörper zur Aufnahme von geschmolzenem Stahl und Stahlschlacke über dem geschmolzenen Stahl,
einem Zuführelement zum Zuführen des durch die Vor-Reduktionseinrichtung reduzierten eisenhaltigen Materials in den Ofenkörper, und
einem Auslass für Stahl zum Ablassen des geschmolzenen Stahls aus dem Ofenkörper;
und wobei der Schmelzofen (96) auch mindestens eine Sprühpistole für kohlenstoffhaltiges Material (911) aufweist, deren Mündung in die Stahlschlacke eingeführt ist, um ein kohlenstoffhaltiges Material auf die Stahlschlacke zu sprühen;
und der Schmelzofen (96) ferner mindestens eine Sauerstoffpistole des Schmelzofens (912) aufweist, deren Mündung in die Stahlschlacke eingeführt ist, um Sauerstoffgas auf die Stahlschlacke zu blasen, wobei durch Versprühen des kohlenstoffhaltigen Materials und Blasen des Sauerstoffgases ein Schaumschlacken-Sieden in der Stahlschlacke gebildet wird;
und wobei mindestens eine in den Ofenkörper eingesetzte CO-Sauerstoff-Verbrennungspistole (99) eingesetzt ist, deren Mündung sich oberhalb der Stahlschlacke befindet;
und das Zuführelement so angeordnet ist, dass es das eisenhaltige Material vorreduziert in die Schaumschlacken-Siedezone zuführt, und
wobei das Zuführelement eine in die Schaumschlacken-Siedezone eingesetzte Sprühpistole zum Versprühen des eisenhaltigen Materials darin und/oder einen auf die Schaumschlacken-Siedezone gerichteten Serienverteiler (95) zum Zuführen des eisenhaltigen Materials umfasst; und,
ein Gefäß zur Behandlung von geschmolzenem Stahl, das mit dem Auslass für Stahl des Schmelzofens in Verbindung steht und zur Aufnahme des geschmolzenen Stahls aus dem Schmelzofen (96) und zur Entkohlung, Entschwefelung und Entphosphorung des geschmolzenen Stahls verwendet wird,
wobei die Sprühpistole für kohlenstoffhaltiges Material (911) und die Sauerstoffpistole des Schmelzofens (912) in einer der folgenden Betriebsarten angeordnet sind:
(a) die mindestens eine Sprühpistole für kohlenstoffhaltiges Material (911) ist unmittelbar über der mindestens einen Sauerstoffpistole des Schmelzofens (912) angeordnet und die mindestens eine Sprühpistole für kohlenstoffhaltiges Material (911) und die mindestens eine Sauerstoffpistole des Schmelzofens (912) sind oben und unten angeordnet; oder
(b) die Sprühpistole für kohlenstoffhaltiges Material (911) und die Sauerstoffpistole des Schmelzofens (912) sind zu einer Kohle-Sauerstoff-Pistole in Hülsenform konfiguriert, wobei das innere Rohr zur Abgabe des kohlenstoffhaltigen Materials verwendet wird und das äußere Rohr zur Abgabe von Sauerstoffgas verwendet wird, wobei die Kohle-Sauerstoff-Pistole so angeordnet ist, dass ihre Mündung in der Höhe von 1/5 bis 1/3 oben vom Boden der Stahlschlacke eingesetzt wird, und/oder wobei die Kohle-Sauerstoff-Pistole so angeordnet ist, dass sie einen Winkel α relativ zur Horizontalen bildet, der nach unten geneigt ist und die Horizontalprojektion der Kohle-Sauerstoff-Pistole einen Winkel β relativ zur Normalrichtung der Innenfläche des Ofenkörpers an der Einführungsstelle bildet, wobei der Winkel α im Bereich von 15° bis 60° liegt und der Winkel β im Bereich von 0° bis 45° liegt.

2. Stahlherstellungsvorrichtung nach Anspruch 1,
**dadurch gekennzeichnet, dass**, wenn die Sprühpistole für kohlenstoffhaltiges Material (911) und die Sauerstoffpistole des Schmelzofens (912) in der Betriebsart (a) angeordnet sind, die mindestens eine Sauerstoffpistole des Schmelzofens (912) so angeordnet ist, dass sie einen Winkel α relativ zur Horizontalen bildet, der nach unten geneigt ist, und die horizontale Projektion der Sauerstoffpistole des Schmelzofens einen Winkel β relativ zur Normalrichtung der Innenfläche des Ofenkörpers an der Einführungsstelle bildet, wobei der Winkel α im Bereich von 15° bis 60° liegt und der Winkel β im Bereich von 0° bis 45° liegt; und/oder
**dadurch gekennzeichnet, dass** die mindestens eine Sauerstoffpistole des Schmelzofens (912) eine Vielzahl von Sauerstoffpistolen des Schmelzofens umfasst, die gleichförmig um den Ofenkörper herum angeordnet sind; und/oder
**dadurch gekennzeichnet, dass** die mindestens eine Sprühpistole für kohlenstoffhaltiges Material (911) so angeordnet ist, dass sie einen Winkel α relativ zu der nach unten geneigten Horizontalen bildet, und die Horizontalprojektion der Sprühpistole für kohlenstoffhaltiges Material (911) einen Winkel β relativ zu der Normalenrichtung der Innenfläche des Ofenkörpers an der Einführungsstelle bildet, wobei der Winkel α im Bereich von 15° bis 60° liegt und der Winkel β im Bereich von 0° bis 45° liegt.

3. Stahlherstellungsvorrichtung nach Anspruch 1 oder 2,
**dadurch gekennzeichnet, dass**, wenn die Sprühpistole für kohlenstoffhaltiges Material (911) und die Sauerstoffsprühpistole des Schmelzofens (912) in der Betriebsart (a) angeordnet sind, die mindestens eine Sprühpistole für kohlenstoffhaltiges Material (911) eine Vielzahl von Sprühpistolen für kohlenstoffhaltiges Material umfasst, die gleichmäßig um den Ofenkörper herum angeordnet sind.

4. Stahlherstellungsvorrichtung nach einem der Ansprüche 1 bis 3,
**dadurch gekennzeichnet, dass**, wenn die Sprühpistole für kohlenstoffhaltiges Material und die Sauerstoffpistole des Schmelzofens in der Betriebsart (b) angeordnet sind, die Kohle-Sauerstoff-Pistole eine Vielzahl von Kohle-SauerstoffPistolen umfasst, die gleichmäßig um den Ofenkörper herum angeordnet sind.

5. Stahlerzeugungsvorrichtung nach einem der Ansprüche 1 bis 4,
**dadurch gekennzeichnet, dass** die Vor-Reduktionseinrichtung einen Drehherdofen und/oder einen Hängevorreduktionsofen umfasst.

6. Stahlherstellungsvorrichtung nach einem der Ansprüche 1 bis 5,
**dadurch gekennzeichnet, daß** das Gefäß zur Behandlung von geschmolzenem Stahl einen Sauerstoffblasofen (916) mit einer Sauerstoffblaspistole (917) umfaßt.

7. Stahlherstellungsverfahren, das die folgenden Schritte umfasst:
i) Bildung eines Schmelzbades aus geschmolzenem Stahl als untere Schicht und Stahlschlacke als obere Schicht in einem Schmelzofen (96) mit einem Auslaß für Stahl,
ii) Sprühen eines kohlenstoffhaltigen Materials in die Stahlschlacke im Schmelzofen (96) unter Verwendung mindestens einer Sprühpistole für kohlenstoffhaltiges Material (911), deren Mündung in die Stahlschlacke eingeführt ist, und Einblasen von Sauerstoffgas in die Stahlschlacke im Schmelzofen unter Verwendung mindestens einer Sauerstoffpistole des Schmelzofens (912), deren Mündung in die Stahlschlacke eingeführt ist, wobei das kohlenstoffhaltige Material und Sauerstoffgas eine exotherme Verbrennungsreaktion in der Stahlschlacke durchführen, und das durch die exotherme Verbrennungsreaktion erzeugte Gas und die durch das Blasen der Kohle-Sauerstoff-Pistole gebildete Stoßkraft zusammen auf die Stahlschlacke aufgebracht werden, um eine Schaumschlacken-Siedezone in der Stahlschlacke zu bilden;
iii) Hinzufügen eines eisenhaltigen Materials in die Schaumschlacken-Siedezone; und
iv) Absaugen von Stahl aus dem Schmelzofen (96) durch den Auslass für Stahl; wobei die Sprühpistole für kohlenstoffhaltiges Material (911) und die Sauerstoffpistole des Schmelzofens (912) in einer der folgenden Betriebsarten angeordnet sind:
(a) die mindestens eine Sprühpistole für kohlenstoffhaltiges Material (911) ist unmittelbar über der mindestens einen Sauerstoffpistole des Schmelzofens (912) angeordnet und die mindestens eine Sprühpistole für kohlenstoffhaltiges Material (911) und die mindestens eine Sauerstoffpistole des Schmelzofens (912) sind oben und unten angeordnet; oder
(b) die Sprühpistole für kohlenstoffhaltiges Material (911) und die Sauerstoffpistole des Schmelzofens (912) sind zu einer Kohle-Sauerstoff-Pistole in Hülsenform konfiguriert, wobei das innere Rohr zur Abgabe des kohlenstoffhaltigen Materials verwendet wird und das äußere Rohr zur Abgabe von Sauerstoffgas verwendet wird, wobei die Kohle-Sauerstoff-Pistole so angeordnet ist, dass ihre Mündung in der Höhe von 1/5 bis 1/3 oben vom Boden der Stahlschlacke eingesetzt wird, und/oder wobei die Kohle-Sauerstoff-Pistole so angeordnet ist, dass sie einen Winkel α relativ zur Horizontalen bildet, der nach unten geneigt ist, und die Horizontalprojektion der Kohle-Sauerstoff-Pistole einen Winkel β relativ zur Normalrichtung der Innenfläche des Ofenkörpers an der Einführungsstelle bildet, wobei der Winkel α im Bereich von 15° bis 60° liegt und der Winkel β im Bereich von 0° bis 45° liegt.

8. Stahlherstellungsverfahren nach Anspruch 7,
**dadurch gekennzeichnet, dass** der Schritt ii) das Umschließen der Flamme aus der Verbrennungsreaktion von Kohle und Sauerstoff in der Stahlschlacke umfasst, so dass die bei der Reaktion abgegebene Wärme von der Stahlschlacke absorbiert wird; wobei in Schritt iv) der Auslass für Stahl einen Siphonauslass für Stahl (914) umfasst; und/oder
**dadurch gekennzeichnet, dass** die Tiefe des geschmolzenen Stahls in dem Schmelzofen (96) im Bereich von 500mm-1000mm liegt und die Dicke der Stahlschlacke im Bereich von 500mm-1500mm liegt.

9. Stahlherstellungsverfahren nach Anspruch 7 oder 8,
**dadurch gekennzeichnet, dass**, wenn die Sprühpistole für kohlenstoffhaltiges Material (911) und die Sauerstoffpistole des Schmelzofens (912) in der Betriebsart (b) angeordnet sind, der Schritt ii) das Einblasen des kohlenstoffhaltigen Materials und des Sauerstoffgases unter Verwendung der Kohle-Sauerstoff-Pistole in der Höhe von 1/3-1/5 oben vom Boden der Stahlschlacke umfasst, und das Verhältnis zwischen dem Sauerstoffgas und dem kohlenstoffhaltigen Material, das durch die Kohle-Sauerstoff-Pistole eingeblasen wird, eingestellt werden kann, wobei das Verhältnis zwischen dem Sauerstoffgas und dem kohlenstoffhaltigen Material so eingestellt wird, dass der Kohlenstoffgehalt der Stahlschlacke 3 Gew.-%-12 Gew.-% beibehält; und/oder
**dadurch gekennzeichnet, dass** die Sprühpistole für kohlenstoffhaltiges Material (911) und die Sauerstoffpistole des Schmelzofens (912) zu einer Kohle-Sauerstoff-Pistole in Hülsenform konfiguriert sind, wobei das innere Rohr zur Abgabe des kohlenstoffhaltigen Materials und das äußere Rohr zur Abgabe von Sauerstoffgas verwendet wird; und der Schritt ii) das Einführen der Kohle-Sauerstoff-Pistole in die Stahlschlacke umfasst, die nach unten geneigt ist mit einem Winkel α relativ zur Horizontalen und mit einem Winkel β zwischen der horizontalen Projektion der Kohle-Sauerstoff-Pistole und der normalen Richtung der inneren Oberfläche des Ofenkörpers am Einführungspunkt, um die Stahlschlacke zu drehen, wobei der Winkel α im Bereich von 15° bis 60° liegt und der Winkel β im Bereich von 0° bis 45° liegt.

10. Stahlherstellungsverfahren nach einem der Ansprüche 7 bis 9, umfassend auch die Vor-Reduktion des eisenhaltigen Materials durch Verwendung einer Vor-Reduktionseinrichtung, bevor das eisenhaltige Material in die Schaumschlacken-Siedezone gegeben wird;
insbesondere wobei das Metallisierungsverhältnis des vorreduzierten eisenhaltigen Materials 80 Gew.-% bis 97 Gew.-% beträgt; und/oder
insbesondere wobei die Vor-Reduktionseinrichtung einen Suspensions-Vorreduktionsofen und/oder einen Drehherdofen umfasst, wobei der Temperaturbereich des durch den Suspensions-Vorreduktionsofen vorreduzierten eisenhaltigen Materials 400 °C-800 °C und der Temperaturbereich des durch den Drehherdofen vorreduzierten eisenhaltigen Materials 900 °C-1200 °C beträgt.

11. Stahlherstellungsverfahren nach einem der Ansprüche 7 bis 10, umfassend auch das Aufblasen von Sauerstoff auf den geschmolzenen Stahl, der aus dem Schmelzofen durch den Auslass für Stahl durch einen Sauerstoffblasofen (916) strömt, um den geschmolzenen Stahl zu entschwefeln und zu enphosphorisieren.

12. Stahlherstellungsverfahren nach einem der Ansprüche 7 bis 11,
**dadurch gekennzeichnet, dass**, wenn die Sprühpistole für kohlenstoffhaltiges Material (911) und die Sauerstoffpistole des Schmelzofens (912) in der Betriebsart (b) angeordnet sind, der Schritt ii) das Einführen der mindestens einen Sprühpistole für kohlenstoffhaltiges Material in die Stahlschlacke umfasst, die mit einem Winkel α relativ zur Horizontalen nach unten geneigt ist, und mit einem Winkel β zwischen der horizontalen Projektion der Sprühpistole für kohlenstoffhaltiges Material und der Normalrichtung der Innenfläche des Ofenkörpers an der Einführungsstelle, um die Stahlschlacke in Drehung zu versetzen, wobei der Winkel α im Bereich von 15° bis 60° liegt und der Winkel β im Bereich von 0° bis 45° liegt; und/oder
**dadurch gekennzeichnet, dass** der Schritt ii) das Einführen der mindestens einen Sauerstoffpistole des Schmelzofens in die Stahlschlacke umfasst, die mit einem Winkel α relativ zur Horizontalen und mit einem Winkel β zwischen der horizontalen Projektion der Sauerstoffpistole des Schmelzofens und der normalen Richtung der Innenfläche des Ofenkörpers an der Einführungsstelle nach unten geneigt ist, um die Stahlschlacke zu drehen, wobei der Winkel α im Bereich von 15° bis 60° und der Winkel β im Bereich von 0° bis 45° liegt.

13. Kontinuierliches Stahlherstellungsverfahren nach einem der Ansprüche 7 bis 12, umfassend:
i) Bildung eines Schmelzbades aus geschmolzenem Stahl als untere Schicht und Stahlschlacke als obere Schicht in einem Schmelzofen (96) mit einem Auslaß für Stahl;
ii) Sprühen eines kohlenstoffhaltigen Materials in die Stahlschlacke im Schmelzofen unter Verwendung mindestens einer Sprühpistole für kohlenstoffhaltiges Material (911), deren Mündung in die Stahlschlacke eingeführt ist, und Einblasen von Sauerstoffgas in die Stahlschlacke im Schmelzofen unter Verwendung mindestens einer Sauerstoffpistole des Schmelzofens (912), deren Mündung in die Stahlschlacke eingeführt ist, wobei das kohlenstoffhaltige Material und Sauerstoffgas eine exotherme Verbrennungsreaktion in der Stahlschlacke durchführen, und das durch die exotherme Verbrennungsreaktion erzeugte Gas und die durch das Blasen der Kohle-Sauerstoff-Pistole gebildete Stoßkraft zusammen auf die Stahlschlacke aufgebracht werden, um eine Schaumschlacken-Siedezone in der Stahlschlacke zu bilden;
iii) Hinzufügen eines durch eine Vor-Reduktionseinrichtung vorreduzierten eisenhaltigen Materials in die Schaumschlacken-Siedezone; und
iv) Entschwefeln und Entphosphorisieren des geschmolzenen Stahls, der aus dem Auslaß für Stahl austritt, um geschmolzenen Stahl mit einem Kohlenstoffgehalt von 0,01 Gew.-% bis 0,40 Gew.-% zu erhalten.

## Revendications

1. Appareil de fabrication d'acier en continu, comprenant :
un dispositif de pré-réduction pour pré-réduire un matériau contenant du fer,
un four de fusion (96) comprenant
un corps de four pour loger de l'acier fondu et un laitier d'acier sur l'acier fondu,
un élément d'alimentation pour alimenter le matériau contenant du fer pré-réduit par le dispositif de pré-réduction dans le corps de four, et
une sortie pour l'acier pour épuiser l'acier fondu du corps de four, et
le four de fusion (96) comprend en outre au moins un canon de pulvérisation pour le matériau contenant du carbone (911) avec son museau inséré dans le laitier d'acier pour pulvériser un matériau contenant du carbone au laitier d'acier ;
et le four de fusion (96) comprend en outre au moins un canon à oxygène du four de fusion (912) avec son museau inséré dans le laitier d'acier pour souffler l'oxygène gazeux au laitier d'acier, et en pulvérisant le matériau contenant du carbone et en soufflant le gaz d'oxygène, une ébullition de laitier de mousse est formée dans le laitier d'acier ;
et au moins un canon de combustion de CO-oxygène (99) inséré dans le corps de four avec son museau situé au-dessus du laitier d'acier ;
et l'élément d'alimentation est disposé pour alimenter le matériau contenant du fer pré-réduit dans la zone d'ébullition de laitier de mousse et
l'élément d'alimentation comprenant un canon de pulvérisation inséré dans la zone d'ébullition de laitier de mousse pour pulvériser le matériau contenant du fer à l'intérieur, et/ou un distributeur de type en série (95) destiné à la zone d'ébullition de laitier de mousse pour alimenter le matériau contenant du fer ; et,
un récipient de traitement d'acier fondu, qui est en communication avec la sortie pour l'acier du four de fusion et est utilisé pour recevoir l'acier fondu du four de fusion (96) et décarboniser, désulfurer et déphosphorer l'acier fondu,
le canon de pulvérisation pour le matériau contenant du carbone (911) et le canon à oxygène du four de fusion (912) étant disposés dans un des modes suivants :
(a) l'au moins un canon de pulvérisation pour le matériau contenant du carbone (911) est disposé immédiatement au-dessus de l'au moins un canon à oxygène du four de fusion (912), et l'au moins un canon de pulvérisation pour le matériau contenant du carbone (911) et l'au moins un canon à oxygène du four de fusion (912) sont disposés de haut en bas ; ou
(b) le canon de pulvérisation pour le matériau contenant du carbone (911) et le canon à oxygène du four de fusion (912) sont configurés dans un canon à charbon-oxygène en forme de chemise, le tube interne étant utilisé pour délivrer le matériau contenant du carbone, et le tube externe étant utilisé pour délivrer de l'oxygène gazeux, le canon à charbon-oxygène étant disposé pour insérer son museau à la hauteur de 1/5 à 1/3 au-dessus de la partie inférieure du laitier d'acier et/ou le canon à charbon-oxygène étant disposé pour former un angle α par rapport à l'horizontale incliné vers le bas, et la projection horizontale du canon à charbon-oxygène forme un angle β par rapport à la direction normale de la surface interne du corps de four au point d'insertion, l'angle α se situant dans la plage de 15° à 60°, et l'angle β se situant dans la plage de 0° à 45°.

2. Appareil de fabrication d'acier selon la revendication 1,
**caractérisé en ce que** le canon de pulvérisation pour le matériau contenant du carbone (911) et le canon à oxygène du four de fusion (912) sont disposés dans le mode (a), l'au moins un canon à oxygène du four de fusion (912) est disposé pour former un angle α par rapport à l'horizontale incliné avers le bas, et la projection horizontale du canon à oxygène du four de fusion forme un angle β par rapport à la direction normale de la surface interne du corps de four au point d'insertion, l'angle α se situant dans la plage de 15° à 60° et l'angle β se situant dans la plage de 0° à 45° ; et/ou
**caractérisé en ce que** l'au moins un canon à oxygène du four de fusion (912) comprend une pluralité de canons à oxygène du four de fusion disposés uniformément autour du corps de four ; et/ou
**caractérisé en ce que** l'au moins un canon de pulvérisation pour le matériau contenant du carbone (911) est disposé pour former un angle α par rapport à l'horizontale incliné vers le bas, et la projection horizontale du canon de pulvérisation pour le matériau contenant du carbone (911) forme un angle β par rapport à la direction normale de la surface interne du corps de four au point d'insertion, l'angle α se situant dans la plage de 15° à 60° et l'angle β se situant dans la plage de 0° à 45°.

3. Appareil de fabrication d'acier selon la revendication 1 ou 2, **caractérisé en ce que** quand le canon de pulvérisation pour le matériau contenant du carbone (911) et le canon à oxygène du four de fusion (912) sont disposés dans le mode (a), l'au moins un canon de pulvérisation pour le matériau contenant du carbone (911) comprend une pluralité de canons de pulvérisation pour le matériau contenant du carbone disposés uniformément autour du corps de four.

4. Appareil de fabrication d'acier selon l'une quelconque des revendications 1 à 3,
**caractérisé en ce que**, quand le canon de pulvérisation pour le matériau contenant du carbone et le canon à oxygène du four de fusion sont disposés dans le mode (b), le canon à charbon-oxygène comprend une pluralité de canons à charbon-oxygène disposés uniformément autour du corps de four.

5. Appareil de fabrication d'acier selon l'une quelconque des revendications 1 à 4, **caractérisé en ce que** le dispositif de pré-réduction comprend un four à foyer rotatif et/ou un four de pré-réduction en suspension.

6. Appareil de fabrication d'acier selon l'une quelconque des revendications 1 à 5, **caractérisé en ce que** le récipient de traitement d'acier fondu comprend un four à soufflage d'oxygène (916) avec un canon de soufflage d'oxygène (917).

7. Procédé de fabrication d'acier, comprenant les étapes de :
i) formation d'un pool de fusion composé d'acier fondu comme couche inférieure et de laitier d'acier comme couche supérieure dans un four de fusion (96) comprenant une sortie pour l'acier,
ii) pulvérisation d'un matériau contenant du carbone dans le laitier d'acier dans le four de fusion (96) en utilisant au moins un canon de pulvérisation pour le matériau contenant du carbone (911) avec son museau inséré dans le laitier d'acier, et le soufflage de l'oxygène gazeux dans le laitier d'acier dans le four de fusion en utilisant au moins un canon à oxygène du four de fusion (912) avec son museau inséré dans le laitier d'acier, le matériau contenant du carbone et le gaz oxygène effectuant une réaction exothermique de combustion dans le laitier d'acier, et le gaz produit par la réaction exothermique de combustion et la force d'impact formée par le soufflage du canon à charbon-oxygène sont appliqués au laitier d'acier ensemble pour former une zone d'ébullition de laitier de mousse dans le laitier d'acier ;
iii) addition d'un matériau contenant du fer dans la zone d'ébullition de laitier de mousse ; et
iv) épuisement de l'acier du four de fusion (96) par la sortie pour l'acier le canon de pulvérisation pour le matériau contenant du carbone (911) et le canon à oxygène du four de fusion (912) étant disposés dans l'un des modes suivants :
(a) au moins un canon de pulvérisation pour le matériau contenant du carbone (911) est disposé immédiatement au-dessus de l'au moins un canon à oxygène du four de fusion (912), et l'au moins un canon de pulvérisation pour le matériau contenant du carbone (911) et l'au moins un canon à oxygène du four de fusion (912) sont disposés de haut en bas ; ou
(b) le canon de pulvérisation pour le matériau contenant du carbone (911) et le canon à oxygène du four de fusion (912) sont configurés en un canon à charbon-oxygène en forme de chemise, le tube interne étant utilisé pour délivrer le matériau contenant du carbone, et le tube externe étant utilisé pour délivrer l'oxygène gazeux, le canon à charbon-oxygène étant disposé pour insérer son museau à la hauteur de 1/5 à 1/3 au-dessus de la partie inférieure du laitier d'acier, et/ou le canon à charbon-oxygène étant disposé pour former un angle α par rapport à l'horizontale incliné vers le bas, et la projection horizontale du canon à charbon-oxygène forme un angle β par rapport à la direction normale de la surface interne du corps de four au point d'insertion, l'angle α se situant dans la plage de 15° à 60° et l'angle β se situant dans la plage de 0° à 45°.

8. Procédé selon la revendication 7,
**caractérisé en ce que** l'étape ii) comprend la combustion de la flamme de la réaction de combustion du charbon et de l'oxygène dans le laitier d'acier de sorte que la chaleur émise de la réaction est absorbée par le laitier ; dans l'étape iv), la sortie pour l'acier comprenant une sortie de siphon pour l'acier (914) ; et/ou
**caractérisé en ce que** la profondeur de l'acier fondu dans le four de fusion (96) se situe dans la plage de 500 mm à 1000 mm, et l'épaisseur du laitier d'acier se situe dans la plage de 500 mm à 1500 mm.

9. Procédé selon la revendication 7 ou 8,
**caractérisé en ce que** le canon de pulvérisation pour le matériau contenant du carbone (911) et le canon à oxygène du four de fusion (912) sont disposés dans le mode (b), l'étape ii) comprend le soufflage du matériau contenant du carbone et de l'oxygène gazeux en utilisant le canon à charbon-oxygène à la hauteur de 1/3 à 1/5 au-dessus de la partie inférieure du laitier d'acier, et le rapport entre l'oxygène gazeux et le matériau contenant du carbone soufflé par le canon à charbon-oxygène peut être ajusté, le rapport entre l'oxygène gazeux et le matériau contenant du carbone étant ajusté de sorte que la teneur en carbone du laitier d'acier se maintient à 3 % en poids à 12 % en poids ; et/ou
**caractérisé en ce que** le canon de pulvérisation pour le matériau contenant du carbone (911) et le canon à oxygène du four de fusion (912) sont configurés en un canon à charbon-oxygène en forme de chemise, le tube interne étant utilisé pour délivrer le matériau contenant du carbone et le tube externe étant utilisé pour délivrer de l'oxygène gazeux ; et l'étape ii) comprend l'insertion du canon à charbon-oxygène dans le laitier d'acier incliné vers le bas avec un angle α par rapport à l'horizontale, et avec un angle β entre la projection horizontale du canon à charbon-oxygène et la direction normale de la surface interne du corps de four au point d'insertion, pour faire tourner le laitier d'acier, l'angle α se situant dans la plage de 15° à 60° et l'angle β se situant dans la plage de 0° à 45°.

10. Procédé selon l'une quelconque des revendications 7 à 9, comprenant en outre la pré-réduction du matériau contenant du fer en utilisant un dispositif de pré-réduction avant d'ajouter le matériau contenant du fer dans la zone d'ébullition de laitier de mousse ;
en particulier le rapport de métallisation du matériau contenant du fer pré-réduit étant de 80 % en poids à 97 % en poids ; et/ou
en particulier le dispositif de pré-réduction comprenant un four de pré-réduction en suspension et/ou un four à foyer rotatif, la plage de température du matériau contenant du fer pré-réduit par le four de pré-réduction en suspension étant de 400 °C à 800 °C et la plage de température du matériau contenant du fer pré-réduit par le four à foyer rotatif étant de 900 °C à 1200 °C.

11. Procédé selon l'une quelconque des revendications 7 à 10, comprenant en outre le soufflage de l'oxygène à l'acier fondu s'écoulant du four de fusion par la sortie pour l'acier par un four de soufflage d'oxygène (916) pour désulfurer et déphosphorer l'acier fondu.

12. Procédé selon l'une quelconque des revendications 7 à 11,
**caractérisé en ce que** le canon de pulvérisation pour le matériau contenant du carbone (911) et le canon à oxygène du four de fusion (912) sont disposés dans le mode (b), l'étape ii) comprend l'insertion de l'au moins un canon de pulvérisation pour le matériau contenant du carbone dans le laitier d'acier incliné vers le bas avec un angle α par rapport à l'horizontale, et avec un angle β entre la projection horizontale du canon de pulvérisation pour le matériau contenant du carbone et la direction normale de la surface interne du corps de four au point d'insertion, pour faire tourner le laitier d'acier, l'angle α se situant dans la plage de 15° à 60° et l'angle β se situant dans la plage de 0° à 45° ; et/ou **caractérisé en ce que** l'étape ii) comprend l'insertion de l'au moins un canon à oxygène du four de fusion dans le laitier d'acier incliné vers le bas avec un angle α par rapport à l'horizontale, et avec un angle β entre la projection horizontale du canon à oxygène du four de fusion et la direction normale de la surface interne du corps de four au point d'insertion, pour faire tourner le laitier d'acier, l'angle α se situant dans la plage de 15° à 60° et l'angle β se situant dans la plage de 0° à 45°.

13. Procédé de fabrication d'acier en continu selon l'une quelconque des revendications 7 à 12, comprenant
i) la formation d'un pool fondu composé d'acier fondu comme couche inférieure et de laitier d'acier comme couche supérieure dans un four de fusion (96) comprenant une sortie pour l'acier ;
ii) la pulvérisation d'un matériau contenant du carbone dans le laitier d'acier dans le four de fusion en utilisant au moins un canon de pulvérisation pour le matériau contenant du carbone (911) avec son museau inséré dans le laitier d'acier, et le soufflage de l'oxygène gazeux dans le laitier d'acier dans le four de fusion en utilisant au moins un canon à oxygène du four de fusion (912) avec son museau inséré dans le laitier d'acier, le matériau contenant du carbone et l'oxygène gazeux effectuant une réaction exothermique de combustion dans le laitier d'acier, et le gaz produit par la réaction exothermique de combustion et la force d'impact formée par le soufflage du canon à charbon-oxygène sont appliqués au laitier d'acier ensemble pour former une zone d'ébullition de laitier de mousse dans le laitier d'acier ;
iii) l'addition d'un matériau contenant du fer pré-réduit par un dispositif de pré-réduction dans la zone d'ébullition de laitier de mousse ; et
iv) la désulfuration et la déphosphoration de l'acier fondu épuisé de la sortie pour l'acier, pour obtenir de l'acier fondu avec une teneur en carbone de 0,01 % en poids à 0,40 % en poids.
